# EUROPEAN PATENT APPLICATION

(11) **EP 4 401 466 A1**
(43) Date of publication of application: **17.07.2024**
(21) Application number: 22882632.7
(22) Date of filing: 30.09.2022
(51) Int. Cl.: H04W 28/24, H04W 76/20

(54) **COMMUNICATION METHOD AND APPARATUS AND DEVICE**

(30) Priority: 19.10.2021 CN 202111214064
(71) Applicant: Huawei Technologies Co., Ltd., Shenzhen, Guangdong 518129 (CN)
(72) Inventor: GE, Cuili, Shenzhen, Guangdong 518129 (CN); LI, Meng, Shenzhen, Guangdong 518129 (CN); YANG, Yanmei, Shenzhen, Guangdong 518129 (CN)
(74) Representative: Pfenning, Meinig & Partner mbB
(86) International application number: PCT/CN2022/123418
(87) International publication number: WO 2023/066021

(57) **Abstract**

This application discloses a communication method, an apparatus, and a device, to ensure continuity of service transmission. The method includes: An AS sends a service data packet of a first service to a terminal device over a multicast session. When a condition for the terminal device to perform inter-communication system switching is met or the terminal device performs the inter-communication system switching, the terminal device may send first information to trigger the AS to send the service data packet of the first service to the terminal device in a unicast transmission mode. In this way, an inter-communication system switching procedure of the terminal device does not affect transmission of the first service of the terminal device, to ensure continuity of service transmission.

## Description

### CROSS-REFERENCE TO RELATED APPLICATIONS

This application claims priority to Chinese Patent Application No. 202111214064.8, filed with the China National Intellectual Property Administration on October 19, 2021 and entitled "COMMUNICATION METHOD, APPARATUS, AND DEVICE", which is incorporated herein by reference in its entirety.

### TECHNICAL FIELD

This application relates to the field of communication technologies, and in particular, to a communication method, an apparatus, and a device.

### BACKGROUND

In a mobile communication system, there are a plurality of service transmission modes. The plurality of service transmission modes may include a multicast transmission mode, a unicast transmission mode, and a broadcast transmission mode. The multicast transmission mode is a transmission mode in which a sender sends a service data packet, and a plurality of receivers joining a multicast session receive the service data packet. For example, a network device sends a service data packet, and a plurality of terminal devices joining a multicast session receive the service data packet. The unicast transmission mode is a transmission mode in which a sender sends a service data packet, and a receiver receives the service data packet. For example, a network device sends a service data packet, and a terminal device receives the service data packet. The broadcast transmission mode is a transmission mode in which a sender sends a service data packet, and a plurality of receivers within a coverage area of the sender receive the service data packet. For example, a network device sends a service data packet, and a plurality of terminal devices within a coverage area of the network device receive the service data packet.

Different transmission modes may be supported in different radio access technologies (radio access technologies, RATs). When the terminal device switches between two mobile communication systems using different radio access technologies (for example, switches from a 5th generation (5^{th} generation, 5G) mobile communication system to a 4th generation (4^{th} generation, 4G) mobile communication system), if the mobile communication system sends a service data packet to the terminal device in the multicast transmission mode before the switching, and the mobile communication system does not support the multicast transmission mode after the switching, the service data packet received by the terminal device may be interrupted, affecting continuity of service transmission of the terminal device.

### SUMMARY

Embodiments of this application provide a communication method, an apparatus, and a device, to ensure continuity of service transmission.

According to a first aspect, an embodiment of this application provides a communication method. The method includes:

A terminal device may receive a service data packet of a first service from an AS over a multicast session of a first mobile communication system. The terminal device may send first information to the AS when a switching condition for the terminal device to switch from the first mobile communication system to a second mobile communication system is met or when the terminal device switches from the first mobile communication system to the second mobile communication system, to trigger the AS to send the service data packet of the first service to the terminal device in a unicast transmission mode.

Based on this method, the AS sends the service data packet of the first service to the terminal device over the multicast session of the first mobile communication system. When the condition for the terminal device to perform inter-communication system switching is met or the terminal device performs the inter-communication system switching, the terminal device may send the first information to trigger the AS to send the service data packet of the first service to the terminal device in the unicast transmission mode. In this way, transmission of the first service of the terminal device is not affected in an inter-communication system switching procedure of the terminal device. To be specific, when the terminal device meets the condition for inter-communication system switching or performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

In a possible design, after sending the first information to the AS, the terminal device may receive the service data packet of the first service from the AS in the unicast transmission mode.

Optionally, the first mobile communication system is a mobile communication system using a first RAT, and the second mobile communication system is a mobile communication system using a second RAT.

Optionally, the first RAT is a 5G radio access technology, and the second RAT is a 4G radio access technology.

In a possible design, the terminal device may receive the service data packet of the first service from the AS in but not limited to the following manners:
Manner 1: The terminal device may receive the service data packet of the first service from the AS through a unicast transmission path of the first mobile communication system.
Manner 2: The terminal device may receive the service data packet of the first service from the AS through a unicast transmission path of the second mobile communication system.

Based on this design, the terminal device may receive the service data packet of the first service from the AS through the unicast transmission paths/the unicast transmission path of the first mobile communication system and/or the second mobile communication system. In this way, the terminal device can flexibly receive the service data packet of the first service.

In a possible design, the switching condition may include but is not limited to at least one or a combination of the following:
signal quality of the first mobile communication system is less than a first threshold;
signal quality of the second mobile communication system is greater than a second threshold;
signal quality of the second mobile communication system is greater than signal quality of the first mobile communication system;
the terminal device is located within a coverage area of the second mobile communication system; or
the terminal device moves from a coverage area of the first mobile communication system to a coverage area of the second mobile communication system.

Based on this design, when the terminal device determines that the condition for inter-communication system switching is met, the terminal device may send the first information to trigger the AS to send the service data packet of the first service to the terminal device in the unicast transmission mode. In this way, transmission of the first service of the terminal device is not affected in an inter-communication system switching procedure of the terminal device. To be specific, when the terminal device meets the condition for inter-communication system switching, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

In a possible design, the first information may include but is not limited to at least one of the following:
information indicating that the terminal device prepares to switch from the first mobile communication system to the second mobile communication system;
information indicating that the terminal device prepares to switch to the second mobile communication system;
information indicating that the terminal device is about to switch from the first mobile communication system to the second mobile communication system;
information indicating that the terminal device is about to switch to the second mobile communication system;
information indicating that the terminal device has switched from the first mobile communication system to the second mobile communication system;
information indicating that the terminal device has switched to the second mobile communication system;
information indicating that the terminal device is located within a coverage area of the second mobile communication system;
information indicating that the terminal device moves from a coverage area of the first mobile communication system to a coverage area of the second mobile communication system;
information indicating that signal quality of the first mobile communication system is less than a first threshold;
information indicating that signal quality of the second mobile communication system is greater than a second threshold;
information indicating that signal quality of the second mobile communication system is greater than signal quality of the first mobile communication system;
information indicating that the terminal device is about to leave the multicast session;
information indicating that the terminal device has left the multicast session;
information indicating that the terminal device is removed from the multicast session;
information indicating that the multicast session is released;
information indicating that the terminal device cannot receive the service data packet of the first service over the multicast session;
information indicating that the terminal device is about to be attached to or has been attached to the second mobile communication system; or
information used to request the AS to send the service data packet of the first service to the terminal device in the unicast transmission mode.

In this design, the first information may have a plurality of representation forms. In this case, the terminal device may flexibly trigger, based on the plurality of representation forms of the first information, the AS to send the service data packet of the first service to the terminal device in the unicast transmission mode.

In a possible design, after receiving a first indication from a session management network element of the first mobile communication system, the terminal device may send the first information to the AS based on the first indication. The first indication may indicate that the multicast session is released. The first information may include but is not limited to at least one of the following: the information indicating that the terminal device has left the multicast session, the information indicating that the terminal device is removed from the multicast session, the information indicating that the multicast session is released, or the information indicating that the terminal device cannot receive the service data packet of the first service over the multicast session.

Optionally, when the terminal device switches from the first mobile communication system to the second mobile communication system, the session management network element sends the first indication to the terminal device.

Based on this design, when the terminal device switches from the first mobile communication system to the second mobile communication system, after receiving the first indication indicating that the multicast session is released, the terminal device may send the first information to trigger the AS to send the service data packet of the first service to the terminal device in the unicast transmission mode. In this way, transmission of the first service is not affected in an inter-communication system switching procedure of the terminal device. To be specific, when the terminal device performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

In a possible design, the terminal device may send the first information to the AS based on the first indication when at least one of the following conditions is met: the multicast session is not a local multicast session; or the multicast session is a local multicast session, and the terminal device is located in a service area of the local multicast session.

When the foregoing condition is met, if the terminal device is removed from the multicast session, the terminal device further needs to continue to obtain an application layer service. When the foregoing condition is not met, if the terminal device is removed from the multicast session, the terminal device may not obtain the application layer service. Based on this design, only when the foregoing condition is met, the terminal device sends the first information, to trigger the AS to send the application layer service to the terminal device in the unicast transmission mode. When the foregoing condition is not met, the terminal device does not need to send the first information, so that a resource required for sending the first information can be saved.

In a possible design, after receiving a handover command from the first mobile communication system, the terminal device may determine, based on the handover command, whether the multicast session is rejected by the second mobile communication system. When the multicast session is rejected by the second mobile communication system, the terminal device may send the first information to the AS. The handover command instructs the terminal device to switch to the second mobile communication system.

Based on this design, when the terminal device switches from the first mobile communication system to the second mobile communication system, if the terminal device determines, based on the handover command, that the multicast session is rejected by the second mobile communication system, the terminal device may send the first information to trigger the AS to send the service data packet of the first service to the terminal device in the unicast transmission mode. In this way, transmission of the first service is not affected in an inter-communication system switching procedure of the terminal device. To be specific, when the terminal device performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

In a possible design, the terminal device may receive configuration information from the AS. The configuration information may indicate that the terminal device sends the first information to the AS when the switching condition is met or when the terminal device switches from the first mobile communication system to the second mobile communication system.

Based on this design, the terminal device sends the first information to the AS only after receiving the configuration information, so that a resource for sending the first information can be saved, to avoid a waste of resources.

According to a second aspect, an embodiment of this application provides a communication method. The method includes:

An AS may send a service data packet of a first service to a terminal device over a multicast session of a first mobile communication system. After receiving first information from the terminal device, the AS may send the service data packet of the first service to the terminal device in a unicast transmission mode based on the first information. The first information may trigger the AS to send the service data packet of the first service to the terminal device in the unicast transmission mode.

The AS may receive the first information from the terminal device when a switching condition for the terminal device to switch from the first mobile communication system to a second mobile communication system is met or when the terminal device switches from the first mobile communication system to the second mobile communication system.

Based on this method, the AS sends the service data packet of the first service to the terminal device over the multicast session of the first mobile communication system. When the condition for the terminal device to perform inter-communication system switching is met or the terminal device performs the inter-communication system switching, the terminal device may send the first information to trigger the AS to send the service data packet of the first service to the terminal device in the unicast transmission mode. In this way, transmission of the first service of the terminal device is not affected in an inter-communication system switching procedure of the terminal device. To be specific, when the terminal device meets the condition for inter-communication system switching or performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

In a possible design, the first information may include but is not limited to at least one of the following:
information indicating that the terminal device prepares to switch from the first mobile communication system to a second mobile communication system;
information indicating that the terminal device prepares to switch to a second mobile communication system;
information indicating that the terminal device is about to switch from the first mobile communication system to a second mobile communication system;
information indicating that the terminal device is about to switch to a second mobile communication system;
information indicating that the terminal device has switched from the first mobile communication system to a second mobile communication system;
information indicating that the terminal device has switched to a second mobile communication system;
information indicating that the terminal device is located within a coverage area of a second mobile communication system;
information indicating that the terminal device moves from a coverage area of the first mobile communication system to a coverage area of a second mobile communication system;
information indicating that signal quality of the first mobile communication system is less than a first threshold;
information indicating that signal quality of a second mobile communication system is greater than a second threshold;
information indicating that signal quality of a second mobile communication system is greater than signal quality of the first mobile communication system;
information indicating that the terminal device is about to leave the multicast session;
information indicating that the terminal device has left the multicast session;
information indicating that the terminal device is removed from the multicast session;
information indicating that the multicast session is released;
information indicating that the terminal device is about to be attached to or has been attached to a second mobile communication system;
information indicating that the terminal device cannot receive the service data packet of the first service over the multicast session; or
information used to request the AS to send the service data packet of the first service to the terminal device in the unicast transmission mode.

In this design, the first information may have a plurality of representation forms. In this case, the AS may flexibly determine whether the service data packet of the first service needs to be sent to the terminal device in the unicast transmission mode.

In a possible design, the AS may send the service data packet of the first service to the terminal device in but not limited to the following manners:
Manner 1: Send the service data packet of the first service to the terminal device through a unicast transmission path of the first mobile communication system.
Manner 2: Send the service data packet of the first service to the terminal device through a unicast transmission path of the second mobile communication system.

Based on this design, the AS may send the service data packet of the first service to the terminal device through the unicast transmission paths/the unicast transmission path of the first mobile communication system and/or the second mobile communication system. In this way, the AS may flexibly send the service data packet of the first service.

In a possible design, the first mobile communication system may be a mobile communication system using a first RAT, and the second mobile communication system may be a mobile communication system using a second RAT.

Optionally, the first RAT is a 5G radio access technology, and the second RAT is a 4G radio access technology.

In a possible design, the AS may send the service data packet of the first service to the terminal device in the unicast transmission mode after receiving the first information and when at least one of the following conditions is met:
the mobile communication system using the second RAT does not support a broadcast transmission mode;
the terminal device is not in a broadcast area of the mobile communication system that corresponds to the first service and that uses the second RAT;
the terminal device does not support broadcast using the second RAT; or
the multicast session does not support switching from the mobile communication system using the first RAT to the mobile communication system using the second RAT.

When the foregoing condition is met, the terminal device cannot receive the service data packet of the first service in a multicast or broadcast transmission mode of the second mobile communication system. Based on this design, when the foregoing condition is met, the AS may send the service data packet of the first service to the terminal device in the unicast transmission mode in a timely manner. In this way, when the terminal device switches to the second mobile communication system, the terminal device may receive the service data packet of the first service in the unicast transmission mode. An inter-communication system switching procedure of the terminal device does not affect transmission of the first service. To be specific, when the terminal device meets the condition for inter-communication system switching or performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

In a possible design, when a first preset condition is met, the AS may send configuration information to the terminal device. The configuration information is used to trigger the terminal device to send the first information. The first preset condition includes at least one of the following:
the first service is allowed to be communicated via the mobile communication system using the first RAT and the mobile communication system using the second RAT;
a service area of the first service overlaps with a coverage area of the mobile communication system using the first RAT, and the service area of the first service overlaps with a coverage area of the mobile communication system using the second RAT; or
the terminal device supports having a first capability and a second capability, where the first capability includes a capability of receiving the service data packet over the multicast session of the mobile communication system using the first RAT, and the second capability includes at least one of the following: a capability of receiving the service data packet through the unicast transmission path of the mobile communication system using the second RAT and a capability of receiving the service data packet through a broadcast transmission path of the mobile communication system using the second RAT.

Based on this design, the AS sets configuration information for the terminal device when the first preset condition is met, and the terminal device sends the first information to the AS only after receiving the configuration information. Therefore, a resource for sending the first information can be saved, to avoid a waste of resources.

According to a third aspect, an embodiment of this application provides a communication method. The method includes:
After receiving a second indication from a mobility management network element of a first mobile communication system, a session management network element may remove a terminal device from a multicast session based on the second indication. The second indication may indicate that the multicast session of the terminal device is rejected by a second mobile communication system when the terminal device switches from the first mobile communication system to the second mobile communication system.

Based on this design, when the terminal device switches from the first mobile communication system to the second mobile communication system, if the multicast session of the terminal device is rejected by the second mobile communication system, the session management network element of the first mobile communication system may remove the terminal device from the multicast session. In this way, unnecessary occupation of multicast session resources by the terminal device can be avoided, to avoid a waste of resources.

In a possible design, the session management network element may send a first indication to the terminal device. The first indication may indicate that the multicast session is released.

Based on this design, the session management network element may indicate to the terminal device that the multicast session is released. After receiving the indication indicating that the multicast session is released, the terminal device may send the first information to trigger an AS to send a service data packet of a first service to the terminal device in a unicast transmission mode. In this way, transmission of the first service is not affected in an inter-communication system switching procedure of the terminal device. To be specific, when the terminal device performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

Optionally, the first mobile communication system may be a mobile communication system using a first RAT, and the second mobile communication system may be a mobile communication system using a second RAT.

Optionally, the first RAT is a 5G radio access technology, and the second RAT is a 4G radio access technology.

In a possible design, the second indication may include: information indicating that the multicast session is rejected by the second mobile communication system or information indicating that a quality of service QoS flow of the multicast session is rejected by the second mobile communication system.

In this design, the second indication may have a plurality of representation forms. In this case, the session management network element may flexibly determine, based on the plurality of representation forms of the second indication, that the multicast session of the terminal device is rejected by the second mobile communication system.

According to a fourth aspect, an embodiment of this application provides a communication apparatus, including units configured to perform steps in any one of the foregoing aspects.

According to a fifth aspect, an embodiment of this application provides a communication device, including at least one processing element and at least one storage element. The at least one storage element is configured to store a program and data. The at least one processing element is configured to read and execute the program and data stored in the storage element, so that the method provided in any one of the foregoing aspects of this application is implemented.

According to a sixth aspect, an embodiment of this application provides a communication system, including a first AN device configured to perform the method provided in the first aspect, an AMF configured to perform the method provided in the second aspect, and a terminal device configured to perform the method provided in the third aspect.

According to a seventh aspect, an embodiment of this application further provides a computer program. When the computer program is run on a computer, the computer is enabled to perform the method provided in any one of the foregoing aspects.

According to an eighth aspect, an embodiment of this application further provides a computer-readable storage medium. The computer-readable storage medium stores a computer program. When the computer program is executed by a computer, the computer is enabled to perform the method provided in any one of the foregoing aspects.

According to a ninth aspect, an embodiment of this application further provides a chip. The chip is configured to read a computer program stored in a memory, to perform the method provided in any one of the foregoing aspects.

According to a tenth aspect, an embodiment of this application further provides a chip system. The chip system includes a processor, configured to support a computer apparatus in implementing the method provided in any one of the foregoing aspects. In a possible design, the chip system further includes a memory. The memory is configured to store a necessary program and necessary data of the computer apparatus. The chip system may include a chip, or may include the chip and another discrete component.

For technical effects that can be achieved in any one of the fourth aspect to the tenth aspect, refer to the descriptions of technical effects that can be achieved in any one of the possible designs of the first aspect to the third aspect. Repeated parts are not described in detail.

### BRIEF DESCRIPTION OF DRAWINGS

FIG. 1 is an architectural diagram of a communication system;
FIG. 2 is an architectural diagram of another communication system;
FIG. 3 is a flowchart of a communication method according to an embodiment of this application;
FIG. 4 is a flowchart of another communication method according to an embodiment of this application;
FIG. 5 is a flowchart of still another communication method according to an embodiment of this application;
FIG. 6 is a flowchart of yet another communication method according to an embodiment of this application;
FIG. 7 is a diagram of a structure of a communication apparatus according to an embodiment of this application; and
FIG. 8 is a diagram of a structure of a communication device according to an embodiment of this application.

### DESCRIPTION OF EMBODIMENTS

This application provides a communication method, an apparatus, and a device, to ensure continuity of service transmission. The method, the apparatus, and the device are based on a same technical concept. Because problem-resolving principles are similar, mutual reference may be made to implementations of the apparatus, the device, and the method. Repeated parts are not described in detail.

Based on solutions provided in embodiments of this application, an application server (application server, AS) sends a service data packet of a first service to a terminal device over a multicast session of a first mobile communication system. When a condition for the terminal device to perform inter-communication system switching is met or the terminal device performs the inter-communication system switching, the terminal device may send first information to trigger the AS to send the service data packet of the first service to the terminal device in a unicast transmission mode. In this way, transmission of the first service of the terminal device is not affected in an inter-communication system switching procedure of the terminal device. To be specific, when the terminal device meets the condition for inter-communication system switching or performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

Some terms in embodiments of this application are described below, to help a person skilled in the art have a better understanding.
(1) A terminal device is a device that provides voice and/or data connectivity for a user. The terminal device may also be referred to as a user equipment (user equipment, UE), a mobile station (mobile station, MS), a mobile terminal (mobile terminal, MT), or the like.
   For example, the terminal device may be a handheld device, a vehicle-mounted device, or the like that has a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or a wireless terminal in an internet of things (internet of things, IOT).
(2) An access network (access network, AN) device is a device that connects a terminal device to a wireless network in a mobile communication system. As a node in a radio access network, the AN device may also be referred to as a base station, a radio access network (radio access network, RAN) node (or device), an access point (access point, AP), or a network device.

Currently, for example, the AN device is a new generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, home evolved NodeB or home NodeB, HNB), a baseband unit (base band unit, BBU), a wireless fidelity (wireless fidelity, Wi-Fi) access point, or a world interoperability for microwave access (world interoperability for microwave access, WiMAX) base station.

In addition, in a network structure, the AN device may include a central unit (central unit, CU) node and a distributed unit (distributed unit, DU) node. In this structure, protocol layers of the AN device are split. Functions of some protocol layers are centrally controlled by the CU, and functions of some or all of remaining protocol layers are distributed in the DU. The CU centrally controls the DU.

(3) A core network (core network, CN) device is a network element included in a CN part of a mobile communication system. The CN device can connect the terminal device to different data networks, and perform services such as charging, mobility management, session management, and user plane forwarding. In mobile communication systems of different standards, names of CN devices having a same function may be different. However, a specific name of a CN device having each function is not limited in embodiments of this application.

For example, in a 4G mobile communication system (namely, long term evolution (long term evolution, LTE)), a network element responsible for functions such as access control, security control, and signaling coordination is a mobility management entity (Mobility management entity, MME). A network element serving as a local mobility management anchor is a serving gateway (serving gateway, S-GW). A network element that serves as an anchor point for switching of an external data network and that is responsible for internet protocol (internet protocol, IP) address allocation is a packet data network (packet data network, PDN) gateway (PDN gateway, P-GW). A network element that stores user-related data and subscription data is a home subscriber server (home subscriber server, HSS). A network element responsible for a policy and charging function is referred to as a policy and charging rules function (policy and charging rules function, PCRF) network element.

For another example, in a 5G mobile communication system, the core network may be divided into a control plane (control plane, CP) and a user plane (user plane, UP) based on specific logical function division. A network element responsible for a control plane function in the CN may be referred to as a control plane network element, and a network element responsible for a user plane function may be referred to as a user plane network element. Specifically, on the user plane, a network element that serves as an interface of the data network and that is responsible for a function such as user plane data forwarding is a user plane function (user plane function, UPF) network element. On the control plane, a network element responsible for an access control function and a mobility management function may be referred to as an access and mobility management function (access and mobility management function, AMF) network element. A network element responsible for session management and execution of a control policy is referred to as a session management function (session management function, SMF) network element. A network element responsible for functions such as subscription data management and user access authorization is referred to as a unified data management (unified data management, UDM) network element. A network element responsible for charging and a policy control function is referred to as a policy control function (Policy and charging function, PCF) network element. An application function (application function, AF) network element is responsible for transmission of a requirement of an application side for a network side.

(4) A data network (data network, DN) is a network outside a mobile communication system, and may provide a service for a user. For example, the DN may be a packet data network (packet data network, PDN), such as the Internet (Internet), an IP multimedia service (IP Multimedia Service, IMS) network, a data network dedicated to some applications, an Ethernet, or an IP local network. This is not limited in this application. A plurality of services may be deployed on the DN, and the DN may provide services such as data and/or voice for the terminal device. The DN may include a plurality of ASs, and each AS may provide at least one type of service.

(5) A session is a connection that is between a terminal device, an access network device, a user plane network element, and a DN and that is established by a session management network element in a mobile communication system for the terminal device, and is used for transmission of user plane data between the terminal device and the DN, for example, a protocol data unit (protocol data unit, PDU) session.

The terminal device may establish one or more PDU sessions with the mobile communication system (for example, a 5G communication system), and one or more quality of service (quality of service, QoS) flows (flows) may be established in each PDU session.

Each QoS flow is used for transmission of data of a same QoS requirement (reliability or a delay) in a service. The QoS flow may be identified by a QoS flow identifier (QoS flow identifier, QFI).

The session may include a multicast session and a unicast session. When the session of the mobile communication system is a multicast session (for example, a 5G multicast session), a service transmission mode is a multicast transmission mode. When the session of the mobile communication system is a unicast session (for example, a 5G unicast session), the service transmission mode is a unicast transmission mode.

In this application, the multicast session may be a multicast broadcast service (multicast and broadcast service, MBS) session. The unicast session may be a PDU session.

(6) A local multicast session is a multicast session implemented in a limited area. The limited area may be a geographical area, may be a coverage area of at least one cell, or may be a coverage area of at least one base station. When a terminal device joining the local multicast session moves out of the limited area, the terminal device cannot receive a service data packet over the local multicast session.

(7) A bearer is a logical path in a mobile communication system, and may be used for transmission of signaling and/or data between communication devices in the mobile communication system.

A bearer between a CN device and a terminal device in a 4G mobile communication system may be an EPS bearer. For example, a 4G unicast bearer may be an EPS unicast bearer (EPS unicast bearer), and is used for transmission of a service data packet between the CN device and the terminal device in the 4G mobile communication system in a unicast transmission mode.

(8) A RAT is a communication technology used by a mobile communication system. For example, the RAT may include but is not limited to 4G, 5G, WiMAX, and the like, and may further include a future communication technology, for example, a 6th generation (6^{th} generation, 6G) mobile communication system. A system using a 5G radio access technology may be referred to as a 5G mobile communication system, and a system using a 4G radio access technology may be referred to as a 4G mobile communication system.

Switching of a terminal device between systems that use different RATs may be referred to as inter-communication system switching.

In this application, the 4G mobile communication system may be an evolved packet system (evolved packet system, EPS).

In embodiments of this application, unless otherwise specified, a quantity of nouns represents "a singular noun or plural nouns", namely, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A character "/" usually indicates an "or" relationship between the associated objects. For example, A/B indicates A or B. "At least one item (piece) of the following" or a similar expression thereof means any combination of these items (pieces), including a singular item (piece) or any combination of plural items (pieces).

In addition, it should be understood that, in descriptions of this application, terms such as "first" and "second" are merely used for distinction and description, but should not be understood as an indication or implication of relative importance, or should not be understood as an indication or implication of a sequence.

In addition, in embodiments of this application, "greater than" and "greater than or equal to" may be replaced with each other, and "less than or equal to" and "less than" may be replaced with each other.

In embodiments of this application, the coverage area of the mobile communication system may be referred to as a coverage of the AN device of the mobile communication system. Signal quality of the mobile communication system may be referred to as signal quality of the AN device of the mobile communication system. Switching to the mobile communication system may also be referred to as switching to the AN device of the mobile communication system or switching to a cell of the mobile communication system. Switching from a first mobile communication system to a second mobile communication system may also be referred to as switching from an AN device of the first mobile communication system to an AN device of the second mobile communication system, or switching from a cell of the first mobile communication system to a cell of the second mobile communication system. Access to the mobile communication system may also be referred to as access to the cell of the mobile communication system or access to the AN device of the mobile communication system.

A communication system used in embodiments of this application is described below with reference to the accompanying drawings.

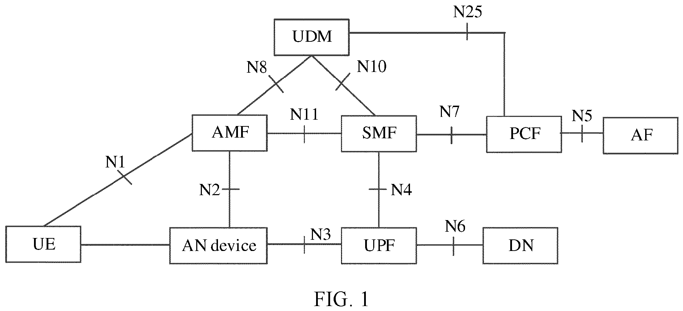

FIG. 1 shows an architecture of a possible communication system to which a communication method is applicable according to an embodiment of this application. As shown in FIG. 1, the communication system includes three parts: a terminal device (where a UE is used as an example in the figure for description), a mobile communication system, and a DN. The mobile communication system provides an access service and a connection service for the terminal device.

The terminal device is an entity that can receive and transmit a radio signal on a user side, and may access the DN via the mobile communication system. For example, the terminal device may access the DN over a session among the terminal device, an AN device, a user plane network element, and the DN. Optionally, the terminal device is used as a data collector or a relay device of another terminal device, so that these devices can perform service communication with the DN via the mobile communication system.

The mobile communication system may access at least one DN, and a same DN may also be accessed by at least one mobile communication system. The mobile communication system may include two parts: an AN and a CN.

A network device deployed in the AN is an AN device, and may be specifically responsible for functions such as radio access, radio resource management on an air interface side, quality of service (quality of service, QoS) management, data compression and encryption, and user plane data forwarding.

A network element deployed in the CN may be referred to as a CN device. A CN in a 5G mobile communication system is used as an example below to specifically describe functions of main network elements in the CN. It can be learned from the foregoing descriptions that network elements in the CN of the 5G mobile communication system may be classified into two types: control plane network elements and user plane network elements.

The user plane network elements include a user plane function (user plane function, UPF), and are mainly responsible for service data packet forwarding, QoS control, charging information statistics, and the like.

The control plane network elements are mainly responsible for service procedure interaction, delivering a data packet forwarding policy to a user plane, a QoS control policy, and the like. The control plane network elements mainly include: an AMF, an SMF, a PCF, an AF, a UDM, and a unified data repository (unified data repository, UDR) (not shown in the figure).

The AMF is mainly responsible for access management and mobility management of the terminal device, for example, responsible for status maintenance of the terminal device, reachability management of the terminal device, location update of the terminal device, network registration of the terminal device, switching of the terminal device, and forwarding of a non-mobility management (mobility management, MM) non-access stratum (non-access stratum, NAS) message.

The SMF is mainly responsible for session management of the terminal device, for example, managing establishment, modification, and release of a PDU session, allocating an internet protocol (internet protocol, IP) address to the terminal device, selecting a UPF that provides a service data packet forwarding function, and maintaining a context of the PDU session.

The PCF is mainly responsible for policy control, for example, generating and/or managing a user, a session, and a QoS flow processing policy, and sending a policy to the AMF and the SMF.

The AF is mainly responsible for providing various services, and interacts with the PCF for policy control and the like.

The UDM is mainly responsible for storing subscriber data (for example, storing subscription information and authentication/authorization information), managing a subscription context, and the like.

The UDR is mainly responsible for storing a service parameter.

Optionally, an AS implements a function of the AF.

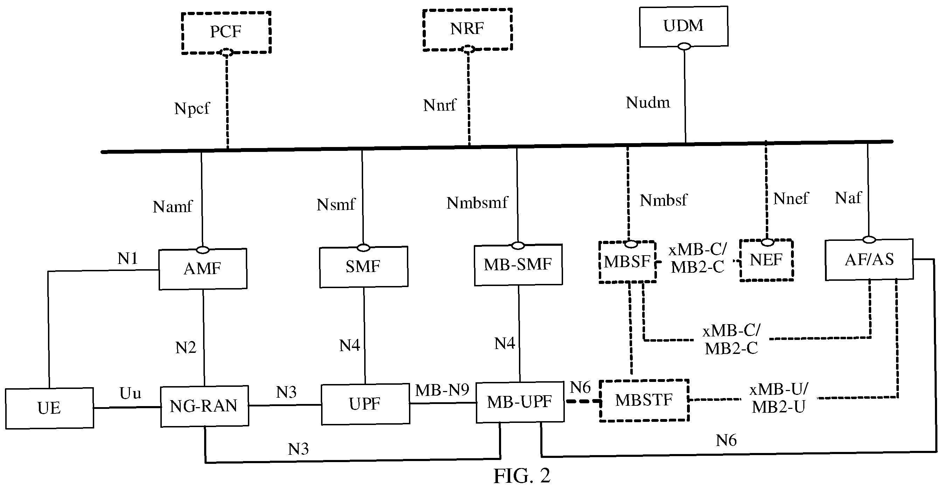

When a multicast and/or broadcast service (for example, an MBS) is implemented, based on the architecture shown in FIG. 1, the communication system may further include a communication device used for the multicast and/or broadcast service. The MBS is used as an example below to specifically describe a communication device related to the multicast and/or broadcast service with reference to FIG. 2.

The communication system may further include a multicast broadcast SMF (multicast broadcast SMF, MB-SMF) and a multicast broadcast UPF (multicast broadcast UPF, MB-UPF).

Optionally, the communication system further includes at least one of the following: a multicast broadcast service function (multicast and broadcast service function, MBSF) or a multicast broadcast service transport function (multicast and broadcast service transport function, MBSTF).

The MB-SMF is an entity supporting a broadcast feature, and may also perform a function of the SMF. The MB-SMF is mainly responsible for: managing an MBS session (MBS session) (for example, controlling quality of service (QoS control) of the MBS session and configuring the MB-UPF); interacting with the AN device to control transmission of a broadcast stream (for example, interacting with the AN device for a specific function of a broadcast session); interacting with the AN device to control transmission of a multicast stream (for example, interacting with the AN device for a specific function of a multicast session); and interacting with the SMF to associate the multicast session with a unicast session (for example, a PDU session).

The MB-UPF is a gateway on a data plane of a 5G multicast and/or broadcast service, and is mainly responsible for: interacting with the MB-SMF to obtain a data forwarding rule, transmitting a service data packet to the AN device in a shared (shared) transmission mode (shared delivery mode), and transmitting the service data packet to the UPF in an individual transmission mode (individual delivery mode).

The MBSF is mainly responsible for: implementing a service layer function and interacting with a 4G mobile communication system for a multimedia broadcast/multicast service (Multimedia Broadcast/Multicast Service, MBMS); interacting with the AF and/or the MB-SMF to support an operation on the multicast session and determine a transmission parameter and a type of the multicast session; selecting the MB-SMF; controlling the MBSTF; determining an IP multicast address of a sender, and the like.

The MBSTF is mainly responsible for: serving as an anchor point of MBS data; serving as a source of IP multicast (IP multicast); supporting a general transmission function of a frame, multiflow, forward error correction (forward error correction, FEC), and the like; and sending an object (object) or an object flow (object flow) for an input file in a multicast or broadcast mode.

In addition, a part of the communication devices in the architecture shown in FIG. 1 can also implement a function for the multicast and/or broadcast service. This is described in detail below.

The PCF is an optional network element used for the multicast and/or broadcast service. For example, when dynamic policy charging control (policy charging control, PCC) is used, the PCF may be configured to implement the multicast and/or broadcast service. The PCF is mainly responsible for: QoS processing of the MBS session; providing policy (policy) information to the MB-SMF; and interacting with the UDR to obtain QoS information.

The SMF is mainly responsible for: discovering the MB-SMF; authenticating the terminal device joining (UE Join) the MBS session; interacting with the MB-SMF to manage a context of the MBS session; and interacting with a RAN to establish a multicast transmission path.

The UPF is mainly responsible for: interacting with the MB-UPF to receive a service data packet that is of the MBS session and that is transmitted in an individual transmission mode; and transmitting, to the terminal device over a PDU session, the service data packet that is of the MBS session and that is transmitted in the individual transmission mode.

The AMF is responsible for a signaling route (for example, a signaling route from the AN device to the MB-SMF), and selecting an AN device configured to broadcast the service data packet.

The AF/AS is mainly responsible for providing service information for the CN device (for example, the 5G CN device), requesting the multicast and/or broadcast service, indicating (instruct) an operation on the MBS session to the CN device, and the like.

The AN device is mainly responsible for: processing a QoS flow (QoS flow) of the multicast session; sending data to the terminal device through point to multipoint (point to multipoint, PTM) and/or point to point (point to point, PTP); configuring an access stratum (access stratum) to receive the broadcast stream; performing switching between the PTM and the PTP; supporting performing switching between interfaces of the multicast session, for example, performing switching between Xn and N2 of the multicast session; processing session signaling; and establishing an air interface broadcast and/or multicast resource and the like.

The UDM is mainly responsible for subscription/subscription management of the multicast session and the like.

The UDR is mainly responsible for managing service parameters, where the service parameters may include a QoS requirement and information about a serving MB-SMF (serving MB-SMF); and managing authorization of the terminal device for the multicast session.

The terminal device is mainly responsible for: receiving the service data packet of the MBS session through the PTM and/or the PTP; receiving a broadcast service data packet through the PTM; processing the QoS; initiating session join (session join) and/or session leave (session leave) for the MBS session; and managing resources on a terminal device side of the multicast session.

FIG. 1 and FIG. 2 each further show interfaces between a plurality of communication devices in the communication system. N1 is an interface between the UE and the control plane of the core network. The UE may interact with the AMF through the N1 interface. N2 is an interface between the access network device and the control plane of the core network, and the access network device may interact with the AMF through the N2 interface. N3 is a communication interface between the access network device and the UPF, and is configured to perform transmission of user data. N4 is an interface between the SMF and UPF, and is configured to perform policy configuration for the UPF. N5 is an interface between the PCF and the AF. N6 is an interface between the UPF and DN. N7 is an interface between the SMF and the PCF. N8 is an interface between the AMF and UDM. N10 is an interface between the UDM and SMF. N11 is an interface between the AMF and the SMF. N25 is an interface between the PCF and the UDM. Interfaces between the control plane network elements in the CN may be implemented through corresponding service-oriented interfaces, as shown in FIG. 2.

It should be noted that the communication systems shown in FIG. 1 and FIG. 2 do not constitute limitations on a communication system to which embodiments of this application are applicable. Therefore, the communication method provided in embodiment of this application may be further applied to communication systems of various standards, for example, an LTE communication system, a 5G communication system, a 6G communication system, a future communication system, vehicle-to-everything (vehicle-to-everything, V2X), a long term evolution-internet of vehicles (LTE-vehicle, LTE-V), vehicle to vehicle (vehicle-to-vehicle, V2V), an internet of vehicles, machine type communication (Machine Type Communication, MTC), an internet of things (internet of things, IoT), long term evolution-machine to machine (LTE-machine to machine, LTE-M), machine to machine (machine to machine, M2M), and the like. In addition, it should be further noted that names of the network elements in the communication system are not limited in embodiments of this application. For example, in the communication systems of different standards, the network elements may have other names. For another example, when a plurality of network elements are integrated into a same physical device, the physical device may also have another name.

The communication systems shown in FIG. 1 and FIG. 2 may support a plurality of multicast transmission modes, which may specifically include a shared transmission mode and an individual transmission mode. The multicast transmission modes supported by the communication systems shown in FIG. 1 and FIG. 2 are described below with reference to the accompanying drawings.

### Mode 1: Shared transmission mode.

The shared transmission mode may mean that service data is communicated through a shared transmission path. The shared transmission path may be shared by or jointly used by a plurality of terminal devices. The shared transmission path may include two parts: a transmission path between a user plane network element (for example, an MB-UPF) and an AN device, and a transmission path between the AN device and the terminal devices.

In an implementation, assuming that the service data is communicated in the shared transmission mode, the transmission path (or referred to as a transmission tunnel, for example, a tunnel based on a general packet radio service tunneling protocol (general packet radio service tunneling protocol, GTP)) between the user plane network element (for example, the MB-UPF) and the AN device and the transmission path that is on an air interface side and that is between the AN device and the terminal devices are shared by a plurality of terminal devices joining a multicast session.

For example, when a plurality of terminal devices (for example, UEa, UEb, and UEc) join the multicast session via a same AN device (for example, a first AN device), the MB-UPF may send a service data packet to the first AN device through a transmission path between the MB-UPF and the first AN device corresponding to the multicast session. The first AN device may send the service data packet to the plurality of terminal devices through a transmission path that is between the first AN device and the terminal devices and that is shared by the plurality of terminal devices joining the multicast session. Correspondingly, the plurality of terminal devices may receive the service data packet through the transmission path.

### Mode 2: Individual transmission mode.

The individual transmission mode may mean that service data is communicated through a dedicated transmission path. The dedicated transmission path may be exclusively used by a single terminal device. In other words, the single terminal device individually uses the dedicated transmission path. The dedicated transmission path may include two parts: a transmission path between a user plane network element (for example, a unicast UPF, where the unicast UPF may be the UPF in FIG. 1) and an AN device, and a transmission path between the AN device and the terminal device.

In an implementation, assuming that the service data is communicated in the individual transmission mode, the transmission path between the user plane network element (for example, the unicast UPF, where the unicast UPF may be the UPF in FIG. 1) and the AN device and the transmission path that is on an air interface side and that is between the AN device and the terminal device may be exclusively used by the single terminal device joining a multicast session.

For example, when a plurality of terminal devices (for example, UEd, and UEe) join the multicast session via a same AN device (for example, a second AN device), an MB-UPF may send a service data packet to the unicast UPF through a transmission path between the MB-UPF and the unicast UPF corresponding to the multicast session. Then, the unicast UPF may separately send the service data packet to UEd and UEe through dedicated transmission paths of UEd and UEe. Specifically, the unicast UPF may send the service data packet to the second AN device through a transmission path that is dedicated to UEd and that is between the unicast UPF and the second AN device. The second AN device may send the service data packet to UEd through a transmission path that is dedicated to UEd and that is between the second AN device and UEd. A data transmission path is: MB-UPF→Unicast UPF→Second AN device→UEd. The unicast UPF may send a service data packet to the second AN device through a transmission path that is dedicated to UEe and that is between the unicast UPF and the second AN device. The second AN device may send the service data packet to UEe through a transmission path that is dedicated to UEe and that is between the second AN device and UEe. A data transmission path is: MB-UPF→Unicast UPF→Second AN device→UEe.

It should be noted that a transmission mode of service data may be determined based on a multicast support capability (for example, supporting multicast or not supporting multicast) of the AN device. For example, a plurality of terminal devices (for example, UEa, UEb, UEc, UEd, and UEe) joint a multicast session via different AN devices. For example, UEa, UEb, and UEc join the multicast session via the first AN device, and UEd and UEe join the multicast session via the second AN device. When the first AN device supports multicast, UEa, UEb, and UEc may receive a service data packet in the mode 1. When the second AN device does not support multicast, UEd and UEe may receive the service data packet in the mode 2.

When the AN device supports multicast, the shared transmission mode may be used. To be specific, the transmission path between the user plane network element (for example, the MB-UPF) and the AN device and the transmission path that is on the air interface side and that is between the AN device and the terminal devices may be shared by the plurality of terminal devices joining the multicast session. When the AN device does not support multicast, the individual transmission mode may be used. To be specific, the transmission path between the user plane network element (for example, the unicast UPF) and the AN device and the transmission path that is on the air interface side and that is between the AN device and the terminal device are exclusively used by the single terminal device.

Solutions provided in this application are described below with reference to the accompanying drawings.

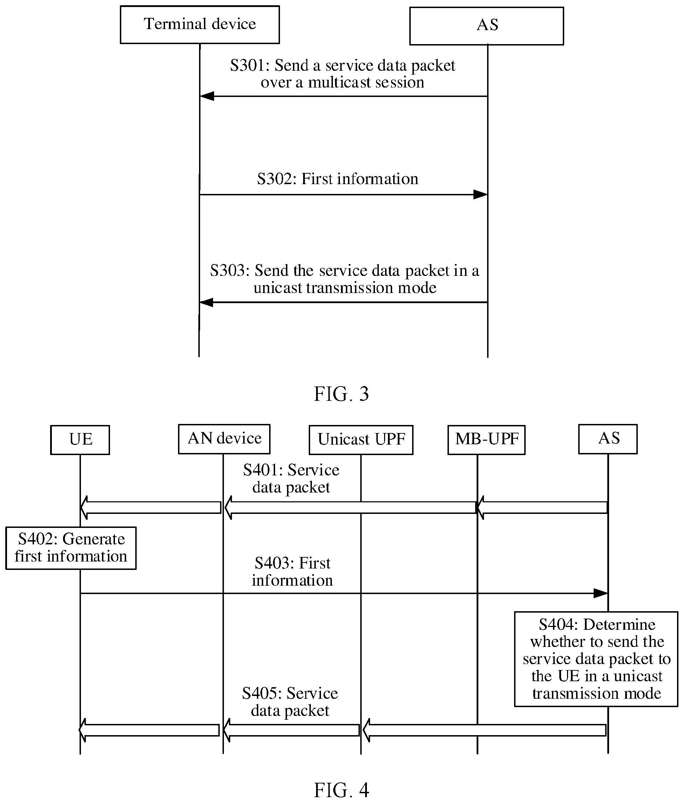

An embodiment of this application provides a communication method. The method may be applied to the communication system shown in FIG. 1 or FIG. 2. The following describes a procedure of the method in detail with reference to a flowchart shown in FIG. 3.

S301: An AS sends a service data packet of a first service to a terminal device over a multicast session of a first mobile communication system.

Correspondingly, the terminal device receives the service data packet of the first service from the AS over the multicast session of the first mobile communication system.

The first service may include but is not limited to at least one of the following: a voice service, a data service, a video service, or the like. The terminal device may be any terminal device that joins the multicast session. In addition, the terminal device may be a member of a multicast group corresponding to the multicast session. This is not limited in this application.

Specifically, after the terminal device accesses the first mobile communication system, the AS may send the service data packet of the first service to the terminal device over the multicast session of the first mobile communication system.

Specifically, step S301 may be implemented in the following manners.

Manner 1: The AS sends the service data packet of the first service to the terminal device over a first multicast session of the first mobile communication system.

The first multicast session is a multicast session among a multicast user plane network element of the first mobile communication system, an AN device of the first mobile communication system accessed by the terminal device, and the terminal device.

The multicast user plane network element may be an MB-UPF.

A transmission path between the MB-UPF and the AN device corresponding to the first multicast session and a transmission path that is on an air interface side and that is between the AN device and the terminal device corresponding to the first multicast session may be shared by the terminal device and another terminal device joining the first multicast session. In this case, the AS may send the service data packet of the first service to the terminal device in a shared transmission mode, namely, over the first multicast session.

Specifically, the AS may send the service data packet of the first service to the MB-UPF. The MB-UPF sends the service data packet of the first service to the terminal device through the transmission path between the MB-UPF and the AN device corresponding to the first multicast session and the transmission path that is on the air interface side and that is between the AN device and the terminal device corresponding to the first multicast session.

Optionally, the first multicast session may be a local multicast session, or may not be a local multicast session.

Manner 2: The AS sends the service data packet of the first service to the terminal device over a second multicast session of the first mobile communication system.

The second multicast session is a multicast session among a multicast user plane network element of the first mobile communication system, a unicast user plane network element of the first mobile communication system accessed by the terminal device, an AN device of the first mobile communication system accessed by the terminal device, and the terminal device.

The multicast user plane network element may be an MB-UPF, and the unicast user plane network element may be a unicast UPF.

A transmission path between the unicast UPF and the AN device corresponding to the second multicast session and a transmission path that is on an air interface side and that is between the AN device and the terminal device corresponding to the second multicast session may be exclusively used by the terminal device joining the second multicast session. In this case, the AS may send the service data packet of the first service to the terminal device in the foregoing individual transmission mode, namely, over the second multicast session.

Specifically, the AS may send the service data packet of the first service to the multicast UPF corresponding to the second multicast session, and the multicast UPF may send the service data packet of the first service to the unicast UPF corresponding to the second multicast session. Then, the unicast UPF may send the service data packet of the first service to the terminal device through the transmission path that is dedicated to the terminal device and that is between the unicast UPF and the AN device corresponding to the second multicast session and the transmission path that is on an air interface side, that is dedicated to the terminal device, and that is between the AN device and the terminal device corresponding to the second multicast session.

Optionally, the second multicast session may be a local multicast session, or may not be a local multicast session.

S302: The terminal device sends first information to the AS when a switching condition for the terminal device to switch from the first mobile communication system to a second mobile communication system is met or when the terminal device switches from the first mobile communication system to the second mobile communication system.

The first information may be used to trigger the AS to send the service data packet of the first service to the terminal device in a unicast transmission mode.

Specifically, the first information may be a message used to trigger the AS to send the service data packet of the first service to the terminal device in the unicast transmission mode, or may be an information element in the message. Specifically, when the first information is the information element, the first information may reuse an information element in an existing message, or may be a new information element in the existing message. For example, the information element may be a first indication field. When a value of the field is a first value, the AS may be triggered to send a message of the service data packet of the first service to the terminal device in the unicast transmission mode.

Correspondingly, the AS receives the first information from the terminal device.

RATs used by the first mobile communication system and the second mobile communication system may be different, or may be the same. This is not limited in this application. Specifically, the first mobile communication system may be a mobile communication system using a first RAT, and the second mobile communication system may be a mobile communication system using a second RAT. For example, the first RAT may be a 5G radio access technology, and the second RAT may be a 4G radio access technology. In other words, the first mobile communication system is a 5G mobile communication system, and the second mobile communication system is a 4G mobile communication system. It is clear that the second RAT may be the 5G radio access technology, and the first RAT may be the 4G radio access technology. This is not limited in this application.

It should be noted that switching of the terminal device from the first mobile communication system to the second mobile communication system may include but is not limited to the following scenarios:
1. The terminal device may be switching from the AN device of the first mobile communication system to an AN device of the second mobile communication system.
2. The terminal device has switched from the AN device of the first mobile communication system to an AN device of the second mobile communication system.
3. The terminal device has switched from the AN device of the first mobile communication system to an AN device of the second mobile communication system, and is switching from a CN device of the first mobile communication system to a CN device of the second mobile communication system.
4. The terminal device has switched from the AN device of the first mobile communication system to an AN device of the second mobile communication system, and has switched from a CN device of the first mobile communication system to a CN device of the second mobile communication system.

A specific scenario in which the terminal device switches from the first mobile communication system to the second mobile communication system is not limited in this application.

S303: The AS sends the service data packet of the first service to the terminal device in the unicast transmission mode based on the first information.

Correspondingly, the terminal device receives the service data packet of the first service from the AS in the unicast transmission mode.

Based on the method provided in the method embodiment, the AS sends the service data packet of the first service to the terminal device over the multicast session of the first mobile communication system. When the condition for the terminal device to perform inter-communication system switching is met or the terminal device performs the inter-communication system switching, the terminal device may send the first information to trigger the AS to send the service data packet of the first service to the terminal device in the unicast transmission mode. In this way, transmission of the first service of the terminal device is not affected in an inter-communication system switching procedure of the terminal device. To be specific, when the terminal device meets the condition for inter-communication system switching or performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

For "the terminal device sends first information to the AS when a switching condition for the terminal device to switch from the first mobile communication system to a second mobile communication system is met" in step S302, detailed descriptions are provided below.

The switching condition may include but is not limited to at least one or a combination of the following: Condition 1: Signal quality of the first mobile communication system is less than a first threshold. Condition 2: Signal quality of the second mobile communication system is greater than a second threshold. Condition 3: Signal quality of the second mobile communication system is greater than signal quality of the first mobile communication system. Condition 4: The terminal device is located within a coverage area of the second mobile communication system. Condition 5: The terminal device moves from a coverage area of the first mobile communication system to a coverage area of the second mobile communication system, or the like.

It should be noted that the switching condition may be a condition for performing switching between AN devices in an existing technology. This is not limited in this application.

Optionally, the switching condition is configured for the terminal device by the AN device accessed by the terminal device. For example, the terminal device may obtain the switching condition from the AN device in a registration procedure.

The following describes how the terminal device determines whether the switching condition is met.

### For the condition 1:

The terminal device may determine, based on the signal quality that is of the first mobile communication system and that is detected by the terminal device, whether the condition 1 is met. Specifically, when the signal quality that is of the first mobile communication system and that is detected by the terminal device is less than the first threshold, the terminal device may determine that the condition 1 is met. Otherwise, the terminal device determines that the condition 1 is not met. The signal quality that is of the first mobile communication system and that is detected by the terminal device may be signal quality of a service data packet (for example, the service data packet of the first service) of the first mobile communication system, or may be signal quality of a control signal (for example, a signal including downlink control information (downlink control information, DCI) or a reference signal) of the first mobile communication system. The first threshold may be preconfigured, or may be sent to the terminal device after being configured for the terminal device by the AN device accessed by the terminal device.

### For the condition 2:

The terminal device may determine, based on the signal quality that is of the second mobile communication system and that is detected by the terminal device, whether the condition 2 is met. Specifically, when the signal quality that is of the second mobile communication system and that is detected by the terminal device is greater than the second threshold, the terminal device may determine that the condition 2 is met. Otherwise, the terminal device determines that the condition 2 is not met. The signal quality that is of the second mobile communication system and that is detected by the terminal device may be signal quality of a reference signal of the second mobile communication system. The second threshold may be preconfigured, or may be sent to the terminal device after being configured for the terminal device by the AN device accessed by the terminal device.

### For the condition 3:

The terminal device may determine, based on the signal quality that is of the first mobile communication system and that is detected by the terminal device and the signal quality that is of the second mobile communication system and that is detected by the terminal device, whether the condition 3 is met. Specifically, when the signal quality that is of the second mobile communication system and that is detected by the terminal device is greater than the signal quality that is of the first mobile communication system and that is detected by the terminal device, the terminal device may determine that the condition 3 is met. Otherwise, the terminal device determines that the condition 3 is not met. For a manner in which the terminal device detects the signal quality of the first mobile communication system, refer to the descriptions of the condition 1. For a manner in which the terminal device detects the signal quality of the second mobile communication system, refer to the descriptions of the condition 2. Details are not described herein again.

Optionally, for the conditions 1 to 3, the signal quality is signal strength. A parameter used to reflect or represent the signal strength may include but is not limited to at least one of the following: reference signal received power (reference signal receiving power, RSRP), reference signal received quality (reference signal receiving quality, RSRQ), or a received signal strength indicator (received signal strength indication, RSSI).

### For the condition 4:

The terminal device may determine, based on whether a signal of the second mobile communication system can be detected, whether the condition 4 is met. Specifically, the signal of the second mobile communication system may be a system message (for example, a system information block (system information block, SIB)) of the second mobile communication system. When the terminal device can detect the system message (for example, the SIB) of the second mobile communication system, the terminal device may determine that the terminal device is located within the coverage area of the second mobile communication system. In other words, the condition 4 is met. When the terminal device cannot detect the system message (for example, a SIB) of the second mobile communication system, the terminal device determines that the terminal device is not located within the coverage area of the second mobile communication system. In other words, the condition 4 is not met.

### For the condition 5:

The terminal device may determine, based on whether a signal of the second mobile communication system can be detected and whether a signal of the first mobile communication system can be detected, whether the condition 5 is met. Specifically, when the terminal device can detect a system message (for example, a SIB) of the second mobile communication system, and the terminal device changes from being able to detect the signal of the first mobile communication system to being unable to detect the signal of the first mobile communication system, the terminal device may determine that the terminal device moves from the coverage area of the first mobile communication system to the coverage area of the second mobile communication system. In other words, the condition 5 is met. Otherwise, the terminal device may determine that the condition 5 is not met. The signal of the first mobile communication system may include at least one of the following: a system message (for example, a SIB) of the first mobile communication system and a service data packet. Optionally, the first information includes but is not limited to at least one of the following: information indicating that the terminal device prepares to switch from the first mobile communication system to the second mobile communication system; information indicating that the terminal device prepares to switch to the second mobile communication system; information indicating that the terminal device is about to switch from the first mobile communication system to the second mobile communication system; information indicating that the terminal device is about to switch to the second mobile communication system; information indicating that the terminal device is located within the coverage area of the second mobile communication system; information indicating that the terminal device moves from the coverage area of the first mobile communication system to the coverage area of the second mobile communication system; information indicating that the signal quality of the first mobile communication system is less than the first threshold; information indicating that the signal quality of the second mobile communication system is greater than the second threshold; information indicating that the signal quality of the second mobile communication system is greater than the signal quality of the first mobile communication system; information indicating that the terminal device is about to leave the multicast session; information indicating that the terminal device is about to be attached to or has been attached to the second mobile communication system; or information used to request the AS to send the service data packet of the first service to the terminal device in the unicast transmission mode.

Based on the method provided in the method embodiment, the AS sends the service data packet of the first service to the terminal device over the multicast session of the first mobile communication system. When the condition for the terminal device to perform inter-communication system switching is met, the terminal device may send the first information to trigger the AS to send the service data packet of the first service to the terminal device in the unicast transmission mode. In this way, transmission of the first service of the terminal device is not affected in an inter-communication system switching procedure of the terminal device. To be specific, when the terminal device performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

For "the terminal device sends first information to the AS when the terminal device switches from the first mobile communication system to the second mobile communication system" in step S302, detailed descriptions are provided below.

Optionally, the terminal device sends the first information to the AS based on information received when the terminal device switches from the first mobile communication system to the second mobile communication system. The received information may be a first indication from a session management network element of the first mobile communication system. The first indication indicates that the multicast session is released. Alternatively, the received information may be a handover command from the first mobile communication system. The following describes a specific implementation process with reference to an implementation 1 and an implementation 2.

Implementation 1: The terminal device may send the first information to the AS based on the first indication from the session management network element of the first mobile communication system. The first indication may indicate that the multicast session is released. The session management network element may be an SMF.

Optionally, the first indication is a dedicated message used to release the multicast session, or may be an information element in the message. For example, the first indication may be an information element in a PDU session modification command (PDU session modification command).

In addition, the first indication may include identification information (for example, a temporary mobile group identity (temporary mobile group identity, TMGI)) of the multicast session.

In the implementation 1, the AS sends the service data packet of the first service to the terminal device over the multicast session of the first mobile communication system. When the terminal device is removed from the multicast session, the terminal device may send the first information to trigger the AS to send the service data packet of the first service to the terminal device in the unicast transmission mode. In this way, transmission of the first service is not affected in an inter-communication system switching procedure of the terminal device. To be specific, when the terminal device performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

Optionally, in the implementation 1, the terminal device sends, in the following manners, the first information to the AS based on the first indication from the session management network element of the first mobile communication system:
Manner 1: After receiving, from the session management network element, the first indication indicating that the multicast session is released, the terminal device may send the first information to the AS.
Manner 2: When a second preset condition is met, the terminal device may send the first information to the AS after receiving the first indication. When the second preset condition is not met, the terminal device may not send the first information to the AS after receiving the first indication.

It should be noted that an execution sequence of determining whether the second preset condition is met and receiving the first indication is not limited in this application. For example, after receiving the first indication, the terminal device may determine whether the second preset condition is met. Alternatively, before receiving the first indication, the terminal device may determine whether the second preset condition is met.

The second preset condition may include but is not limited to at least one of the following: Condition I: The multicast session is not a local multicast session. Condition II: The multicast session is a local multicast session, and the terminal device is located in a service area of the local multicast session.

The following describes how the terminal device determines whether the second preset condition is met.

### For the condition I:

In some possible manners, the terminal device may determine, based on a type of the multicast session, whether the condition I is met. Specifically, when the type of the multicast session is a local multicast session type, the terminal device may determine that the multicast session is the local multicast session. In other words, the condition I is not met. When the type of the multicast session is not the local multicast session type, the terminal device may determine that the multicast session is not the local multicast session. In other words, the condition I is met. The type of the multicast session may be obtained by the terminal device in a session establishment process, or may be carried in a service data packet of the multicast session.

In some other possible manners, the terminal device may determine, based on whether a context of the multicast session includes a parameter (for example, an MBS service area (MBS service area)) of the local multicast session, whether the condition I is met. Specifically, when the context of the multicast session received by the terminal device includes the parameter (for example, the MBS service area) of the local multicast session, the terminal device may determine that the multicast session is a local multicast session. In other words, the condition I is not met. When the context of the multicast session received by the terminal device does not include the parameter (for example, the MBS service area) of the local multicast session, the terminal device may determine that the multicast session is not a local multicast session. In other words, the condition I is met. The context of the multicast session may be obtained by the terminal device in a session establishment process, or may be carried in a service data packet of the multicast session.

### For the condition II:

The terminal device may determine, in the following manners, whether the condition II is met.

Manner A: The terminal device may determine, based on a type of the multicast session, location information of the terminal device, and a service area of the local multicast session, whether the condition II is met.

Specifically, when the type of the multicast session is a local multicast session type, and the service area of the local multicast session includes a location or area indicated by the location information of the terminal device, the terminal device may determine that the multicast session is the local multicast session, and the terminal device is located in the service area of the local multicast session. In other words, the condition II is met. Otherwise, the terminal device may determine that the condition II is not met.

The type of the multicast session may be obtained by the terminal device in a session establishment process, or may be carried in a service data packet of the multicast session.

The location information of the terminal device may be at least one of the following: global positioning system (global positioning system, GPS) information of the terminal device, information about a cell in which the terminal device is located, information about a tracking area (TA) in which the terminal device is located, and information about an AN device accessed by the terminal device.

The terminal device obtains, in the following manners, information (for example, the MBS service area) indicating the service area of the local multicast session: The terminal device obtains, in the session establishment process, the information indicating the service area of the local multicast session. Alternatively, after determining that the multicast session is the local multicast session, the terminal device requests, from the first mobile communication system, the information indicating the service area of the local multicast session.

The information indicating the service area of the local multicast session may include at least one of the following: one or more AN device identities (identities, IDs), one or more cell identities (cell identities, cell IDs), and one or more tracking area identities (tracking area identities, TAIs). When the information indicating the service area of the local multicast session includes one or more AN device identities, a coverage area of an AN device indicated by the one or more AN device identities is the service area of the local multicast session. When the information indicating the service area of the local multicast session includes one or more cell identities, a coverage area of a cell indicated by the one or more cell identities is the service area of the local multicast session. When the information indicating the service area of the local multicast session includes one or more TAIs, an area indicated by the one or more TAIs is the service area of the local multicast session.

Manner B: The terminal device may determine, based on a context of the multicast session, location information of the terminal device, and the service area of the local multicast session, whether the condition II is met.

Specifically, when the context of the multicast session received by the terminal device includes the parameter (for example, the MBS service area) of the local multicast session, and the service area of the local multicast session includes a location or area indicated by the location information of the terminal device, the terminal device may determine that the multicast session is the local multicast session, and the terminal device is located in the service area of the local multicast session. In other words, the condition II is met. Otherwise, the terminal device may determine that the condition II is not met.

The context of the multicast session may be obtained by the terminal device in a session establishment process, or may be carried in a service data packet of the multicast session. For content of the location information of the terminal device, refer to the manner A. For content of the service area of the local multicast session, refer to the manner A. Details are not described herein again.

When the second preset condition is met, if the terminal device is removed from the multicast session, the terminal device further needs to continue to obtain an application layer service. When the second preset condition is not met, if the terminal device is removed from the multicast session, the terminal device may not obtain an application layer service. Based on this design, only when the second preset condition is met, the terminal device sends the first information to trigger the AS to transmit the application layer service to the terminal device in the unicast transmission mode. When the second preset condition is not met, the terminal device does not need to send the first information, so that a resource required for sending the first information can be saved.

Optionally, in the implementation 1, the first information includes but is not limited to at least one of the following: information indicating that the terminal device has left the multicast session; information indicating that the terminal device is removed from the multicast session; information indicating that the multicast session is released; information indicating that the terminal device cannot receive the service data packet of the first service over the multicast session; information indicating that the terminal device prepares to switch from the first mobile communication system to the second mobile communication system; information indicating that the terminal device prepares to switch to the second mobile communication system; information indicating that the terminal device is about to switch from the first mobile communication system to the second mobile communication system; information indicating that the terminal device is about to switch to the second mobile communication system; information indicating that the terminal device is located within the coverage area of the second mobile communication system; information indicating that the terminal device moves from the coverage area of the first mobile communication system to the coverage area of the second mobile communication system; information indicating that the signal quality of the first mobile communication system is less than the first threshold; information indicating that the signal quality of the second mobile communication system is greater than the second threshold; information indicating that the signal quality of the second mobile communication system is greater than the signal quality of the first mobile communication system; information indicating that the terminal device is about to leave the multicast session; information indicating that the terminal device is about to be attached to or has been attached to the second mobile communication system; or information used to request the AS to send the service data packet of the first service to the terminal device in the unicast transmission mode.

Optionally, in an implementation scenario of the implementation 1, the foregoing method further includes: After receiving a second indication from a mobility management network element of the first mobile communication system, the session management network element may remove the terminal device from the multicast session based on the second indication. The second indication may indicate that the multicast session of the terminal device is rejected by the second mobile communication system when the terminal device switches from the first mobile communication system to the second mobile communication system. Specifically, after receiving the second indication, when the session management network element may determine, based on the second indication, that the multicast session of the terminal device is rejected by the second mobile communication system when the terminal device switches from the first mobile communication system to the second mobile communication system, the session management network element may remove the terminal device from the multicast session. The mobility management network element may be an AMF.

When the second indication indicates that the multicast session of the terminal device is rejected by the second mobile communication system when the terminal device switches from the first mobile communication system to the second mobile communication system, the session management network element may further send the first indication to the terminal device. In other words, the second indication may trigger the session management network element to send the first indication to the terminal device.

Optionally, the second indication is a dedicated message or an information element in the message. For example, the second indication may be an information element in a PDU session update session management context request (Nsmf_PDUsession_updateSMcontext request).

In addition, the second indication may include: information indicating that the multicast session is rejected by the second mobile communication system, or information indicating that a quality of service (quality of service, QoS) flow (flow) of the multicast session (for example, an MBS QoS flow) is rejected by the second mobile communication system.

The information indicating that the multicast session is rejected by the second mobile communication system may include at least one of the following: indication information of a session rejected by the second mobile communication system, information indicating that an MBS session is rejected by the second mobile communication system (MBS session was rejected), and indication information of a session accepted by the second mobile communication system. The information indicating that a QoS flow of the multicast session is rejected by the second mobile communication system may include at least one of the following: indication information of a QoS flow of the session rejected by the second mobile communication system, and indication information of a QoS flow of the session accepted by the second mobile communication system.

With reference to content of the second indication, the following uses an example to describe how the session management network element determines, based on the second indication, that the multicast session of the terminal device is rejected by the second mobile communication system when the terminal device switches from the first mobile communication system to the second mobile communication system.

For example, when the second indication includes the indication information of a session rejected by the second mobile communication system, and the session rejected by the second mobile communication system includes the multicast session of the terminal device, the session management network element may determine that the multicast session of the terminal device is rejected by the second mobile communication system.

For another example, when the second indication includes the information indicating that an MBS session is rejected by the second mobile communication system, and the multicast session is the MBS session, the session management network element may determine that the multicast session is rejected by the second mobile communication system.

For sill another example, when the second indication includes the indication information of a session accepted by the second mobile communication system, and the session accepted by the second mobile communication system does not include the multicast session of the terminal device, the session management network element may determine that the multicast session is rejected by the second mobile communication system.

For still another example, when the second indication includes the indication information of a QoS flow of the session rejected by the second mobile communication system, and the QoS flow of the session rejected by the second mobile communication system includes a QoS flow of the multicast session of the terminal device, the session management network element may determine that the QoS flow of the multicast session is rejected by the second mobile communication system, and determine that the multicast session is rejected by the second mobile communication system.

For still another example, when the second indication includes the indication information of a QoS flow of the session accepted by the second mobile communication system, and the QoS flow of the session accepted by the second mobile communication system does not include a QoS flow of the multicast session, the session management network element may determine that the QoS flow of the multicast session is rejected by the second mobile communication system, and determine that the multicast session is rejected by the second mobile communication system.

Based on this method, when the terminal device switches from the first mobile communication system to the second mobile communication system, if the multicast session of the terminal device is rejected by the second mobile communication system, the session management network element of the first mobile communication system may remove the terminal device from the multicast session. In this way, unnecessary occupation of multicast session resources by the terminal device can be avoided, to avoid a waste of resources.

Optionally, in another implementation scenario of the implementation 1, the method further includes: Before sending the first indication to the terminal device, the session management network element may receive a third indication from a multicast session management network element. The third indication may indicate that the multicast session is released. The session management network element may remove the terminal device from the multicast session based on the third indication. In other words, after receiving the third instruction, the session management network element removes the terminal device from the multicast session. The multicast session management network element may be an MB-SMF.

Optionally, when the third indication indicates that the multicast session is released, the session management network element may send the first indication to the terminal device. In other words, the third indication may trigger the session management network element to send the first indication to the terminal device.

Optionally, the third indication is a dedicated message or an information element in the message. For example, the third indication may be an information element in an MBS session context notification (Nmbsmf_MBSSession_ContextStatusNotify).

Optionally, the third indication includes indication information (for example, an identifier of the terminal device) of the terminal device and identification information (for example, a TMGI) of the multicast session.

Based on the method, the session management network element of the first mobile communication system may remove the terminal device from the multicast session after receiving the indication from the multicast session management network element. In this way, unnecessary occupation of multicast session resources by the terminal device can be avoided, to avoid a waste of resources.

Implementation 2: The terminal device may send the first information to the AS based on the handover command from the first mobile communication system. The handover command instructs the terminal device to switch to the second mobile communication system.

Optionally, after receiving the handover command, the terminal device determines, based on the handover command, whether the multicast session is rejected by the second mobile communication system. When a determining result is yes, the terminal device may send the first information to the AS. Otherwise, the terminal device may not send the first information to the AS.

The following uses an example to describe how the terminal device determines, based on the handover command, whether the multicast session is rejected by the second mobile communication system.

For example, when the handover command includes indication information of a session accepted by the second mobile communication system, and the session accepted by the second mobile communication system does not include the multicast session, the terminal device determines that the multicast session is rejected by the second mobile communication system.

For another example, when the handover command includes indication information of a QoS flow of the session accepted by the second mobile communication system, and the QoS flow of the session accepted by the second mobile communication system does not include a QoS flow of the multicast session, the terminal device may determine that the QoS flow of the multicast session is rejected by the second mobile communication system, and determine that the multicast session is rejected by the second mobile communication system.

For still another example, when the handover command includes a QoS flow that needs to be forwarded, and the QoS flow that needs to be forwarded does not include the QoS flow of the multicast session, the terminal device may determine that the multicast session is rejected by the second mobile communication system. In other words, the terminal device may determine that the QoS flow corresponding to the multicast session cannot be switched to the second mobile communication system, or determine that the QoS flow corresponding to the multicast session is rejected by the second mobile communication system.

For still another example, when the handover command includes bearer information of the second mobile communication system, and a bearer indicated by the bearer information of the second mobile communication system does not include a bearer corresponding to the multicast session, the terminal device may determine that the multicast session is rejected by the 4G mobile communication system.

Based on the implementation 2, when the terminal device switches from the first mobile communication system to the second mobile communication system, if the terminal device determines, based on the handover command, that the multicast session is rejected by the second mobile communication system, the terminal device may send the first information to trigger the AS to send the service data packet of the first service to the terminal device in the unicast transmission mode. In this way, transmission of the first service of the terminal device is not affected in an inter-communication system switching procedure of the terminal device. To be specific, when the terminal device performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

Optionally, in the implementation 2, the first information includes but is not limited to at least one of the following: information indicating that the terminal device is about to switch from the first mobile communication system to the second mobile communication system; information indicating that the terminal device is about to switch to the second mobile communication system; information indicating that the terminal device has switched from the first mobile communication system to the second mobile communication system; information indicating that the terminal device has switched to the second mobile communication system; information indicating that the terminal device has been attached to the second mobile communication system; information indicating that the terminal device is located within the coverage area of the second mobile communication system; information indicating that the terminal device moves from the coverage area of the first mobile communication system to the coverage area of the second mobile communication system; information indicating that the terminal device has left the multicast session; information indicating that the terminal device is removed from the multicast session; information indicating that the multicast session is released; information indicating that the terminal device cannot receive the service data packet of the first service over the multicast session; or information used to request the AS to send the service data packet of the first service to the terminal device in the unicast transmission mode.

Correspondingly, in step S302, the first information received by the AS may include but is not limited to at least one of the following: information indicating that the terminal device prepares to switch from the first mobile communication system to the second mobile communication system; information indicating that the terminal device prepares to switch to the second mobile communication system; information indicating that the terminal device is about to switch from the first mobile communication system to the second mobile communication system; information indicating that the terminal device is about to switch to the second mobile communication system; information indicating that the terminal device has been switched from the first mobile communication system to the second mobile communication system; information indicating that the terminal device has switched to the second mobile communication system; information indicating that the terminal device is located within a coverage area of the second mobile communication system; information indicating that the terminal device moves from the coverage area of the first mobile communication system to a coverage area of the second mobile communication system; information indicating that signal quality of the first mobile communication system is less than a first threshold; information indicating that signal quality of the second mobile communication system is greater than the second threshold; information indicating that signal quality of the second mobile communication system is greater than signal quality of the first mobile communication system; information indicating that the terminal device is about to leave the multicast session; information indicating that the terminal device has left the multicast session; information indicating that the terminal device is removed from the multicast session; information indicating that the terminal device is about to be attached to or has been attached to a second mobile communication system; information indicating that the terminal device cannot receive the service data packet of the first service over the multicast session; or information used to request the AS to send the service data packet of the first service to the terminal device in the unicast transmission mode.

Optionally, in the foregoing embodiment, when the first information includes the information indicating that the terminal device prepares to switch from the first mobile communication system to the second mobile communication system or the information indicating that the terminal device is about to switch to the second mobile communication system, the terminal device is in a switching preparation phase.

When the first information includes the information indicating that the terminal device is about to switch from the first mobile communication system to the second mobile communication system or the information indicating that the terminal device is about to switch to the second mobile communication system, the terminal device is switching from the AN device of the first mobile communication system to the AN device of the second mobile communication system, or the terminal device has switched from the AN device of the first mobile communication system to the AN device of the second mobile communication system but has not switched from the CN device of the first mobile communication system to the CN device of the second mobile communication system.

When the first information includes the information indicating that the terminal device has switched from the first mobile communication system to the second mobile communication system or the information indicating that the terminal device has switched to the second mobile communication system, the terminal device has switched from the AN device of the first mobile communication system to the AN device of the second mobile communication system but has not switched from the CN device of the first mobile communication system to the CN device of the second mobile communication system, or the terminal device has switched from the AN device of the first mobile communication system to the AN device of the second mobile communication system and has switched from the CN device of the first mobile communication system to the CN device of the second mobile communication system.

Optionally, in an implementation scenario of the foregoing embodiment, the foregoing method further includes: The AS sends configuration information to the terminal device when a first preset condition is met.

The configuration information may indicate that the terminal device sends the first information to the AS when the switching condition for the terminal device to switch from the first mobile communication system to a second mobile communication system is met or when the terminal device switches from the first mobile communication system to the second mobile communication system. The configuration information may be a message, or may be an information element in the message. Specifically, when the configuration information is the information element, the configuration information may reuse an information element in an existing message, or may be a new information element in the existing message. For example, the information element may be a second indication field. When a value of the field is a second value, it may indicate that the terminal device sends the first information to the AS when the switching condition for the terminal device to switch from the first mobile communication system to a second mobile communication system is met or when the terminal device switches from the first mobile communication system to the second mobile communication system.

Further, S302 may include: When the terminal device meets the switching condition or when the terminal device switches from the first mobile communication system to the second mobile communication system, if the terminal device has received the configuration information, the terminal device sends the first information to the AS.

Based on this method, the AS sets the configuration information for the terminal device when the first preset condition is met, and the terminal device sends the first information to the AS only after receiving the configuration information. Therefore, a resource for sending the first information can be saved, to avoid a waste of resources.

Optionally, the first preset condition includes but is not limited to at least one of the following:
Condition A: The first service is allowed to be communicated via the mobile communication system using the first RAT and the mobile communication system using the second RAT.
Condition B: A service area of the first service overlaps with a coverage area of the mobile communication system using the first RAT, and the service area of the first service overlaps with a coverage area of the mobile communication system using the second RAT.
Condition C: The terminal device supports having a first capability and a second capability, where the first capability includes a capability of receiving the service data packet over the multicast session of the mobile communication system using the first RAT, and the second capability includes at least one of the following: a capability of receiving the service data packet through the unicast transmission path of the mobile communication system using the second RAT, and a capability of receiving the service data packet through a broadcast transmission path of the mobile communication system using the second RAT.

The following describes how the AS determines whether the first preset condition is met.

### For the condition A:

In some possible manners, the AS may determine, by interacting with the mobile communication system using the first RAT and the mobile communication system using the second RAT, whether the condition A is met.

For example, before communicating the service data packet of the first service via the first mobile communication system, the AS may determine, by interacting with the first mobile communication system, that the first mobile communication system is allowed to communicate the first service, so as to determine that the mobile communication system using the first RAT is allowed to communicate the first service. After receiving the first information, the AS may determine, by interacting with the second mobile communication system, whether the mobile communication system using the second RAT is allowed to communicate the first service. In this way, the AS may determine whether the condition A is met.

In some other possible manners, the AS may determine, based on a feature of the first service, whether the condition A is met.

For example, when the first service is a voice service, and both the mobile communication system using the first RAT and the mobile communication system using the second RAT can support the voice service, the AS determines that the condition A is met.

For another example, when the first service is a video service, the mobile communication system using the first RAT supports the video service, and the mobile communication system using the second RAT does not support the video service, the AS determines that the condition A is not met.

### For the condition B:

The AS may obtain, by interacting with the mobile communication system using the first RAT, the coverage area of the mobile communication system using the first RAT; and obtain, by interacting with the mobile communication system using the second RAT, the coverage area of the mobile communication system using the second RAT. When the coverage area of the mobile communication system using the first RAT overlaps with the service area of the first service, and the coverage area of the mobile communication system using the second RAT overlaps with the service area of the first service, the AS determines that the condition B is met. Otherwise, the AS determines that the condition B is not met.

### For the condition C:

The AS may determine, based on capability information reported by the terminal device, whether the terminal device supports the first capability and the second capability, to determine whether the condition C is met. For example, when a capability reported by the terminal device to the AS includes the first capability and the second capability, the AS may determine that the condition C is met. When the capability reported by the terminal device to the AS does not include the first capability or the second capability, the AS may determine that the condition C is not met.

Optionally, step S303 is implemented in the following manners:
Manner 1: After receiving the first information, the AS may send the service data packet of the first service to the terminal device in the unicast transmission mode.
Manner 2: When a third preset condition is met, after receiving the first information, the AS may send the service data packet of the first service to the terminal device in the unicast transmission mode.

It should be noted that an execution sequence of determining whether the third preset condition is met and receiving the first information is not limited in this application. For example, after receiving the first information, the AS may determine whether the third preset condition is met. For another example, before receiving the first information, the AS may determine whether the third preset condition is met.

The third preset condition may include but is not limited to at least one of the following: Condition a: The mobile communication system using the second RAT does not support a broadcast transmission mode. Condition b: The terminal device is not in a broadcast area that corresponds to the first service and that is of the mobile communication system using the second RAT. Condition c: The terminal device does not support broadcast using the second RAT. Condition d: The multicast session does not support switching from the mobile communication system using the first RAT to the mobile communication system using the second RAT.

The following describes how the AS determines whether the third preset condition is met.

### For the condition a:

The AS may determine, by interacting with the mobile communication system using the second RAT, whether the mobile communication system using the second RAT supports the broadcast transmission mode.

### For the condition b:

The AS may obtain, by interacting with the mobile communication system using the second RAT, a broadcast area of the mobile communication system using the second RAT, and obtain location information of the terminal device by interacting with the terminal device. When the terminal device is located in an overlapping area of the broadcast area of the mobile communication system using the second RAT and the service area of the first service, the AS may determine that the condition b is met. Otherwise, the condition b is not met.

### For the condition c:

The AS may determine, based on capability information reported by the terminal device, whether the terminal device supports broadcast using the second RAT, to determine whether the condition c is met. For example, when the capability information reported by the terminal device indicates that the terminal device does not support the broadcast, the AS may determine that the condition c is met. Otherwise, the AS may determine that the condition c is not met. For another example, when a capability that is supported by the terminal device and that is indicated by the capability information reported by the terminal device does not include a broadcast capability, the AS may determine that the condition c is met. Otherwise, the AS may determine that the condition c is not met.

### For the condition d:

In some possible manners, the AS may determine, by interacting with the mobile communication system using the second RAT, whether the mobile communication system using the second RAT supports multicast. When the mobile communication system using the second RAT does not support the multicast, the AS may determine that the condition d is met. That is, the multicast session does not support switching from the mobile communication system using the first RAT to the mobile communication system using the second RAT.

In some other possible manners, the AS may determine, based on the first information from the terminal device, whether the condition d is met. For example, when the first information includes preset indication information, the AS determines that the condition d is met. The preset indication information may include at least one of the following: the information indicating that the terminal device has left the multicast session; the information indicating that the terminal device is removed from the multicast session; the information indicating that the multicast session is released; or the information indicating that the terminal device cannot receive the service data packet of the first service over the multicast session.

In still some possible manners, after determining that the multicast session is rejected by the second mobile communication system using the second RAT, the CN device (for example, the AMF or the SMF) of the first mobile communication system may send indication information to the AS, to indicate that the multicast session does not support switching from the mobile communication system using the first RAT to the mobile communication system using the second RAT, so that the AS may determine that the condition d is met.

When the third preset condition is met, the terminal device cannot receive the service data packet of the first service in a multicast or broadcast transmission mode of the second mobile communication system. Based on this method, when the third preset condition is met, the AS may send the service data packet of the first service to the terminal device in the unicast transmission mode in a timely manner. In this way, when the terminal device switches to the second mobile communication system, the AS may send the service data packet of the first service to the terminal device in the unicast transmission mode. Transmission of the first service of the terminal device cannot be affected in an inter-communication system switching procedure of the terminal device. To be specific, when the terminal device performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to improve continuity of service transmission.

Optionally, in step S303, the unicast transmission mode is represented by transmission of the service data through the unicast transmission path. Specifically, when the unicast transmission mode is used, the AS sends the service data packet of the first service to the terminal device through the unicast transmission path. For example, the AS may send the service data packet of the first service to the terminal device through the unicast transmission path between the user plane network element and the AN device accessed by the terminal device and the unicast transmission path between the AN device accessed by the terminal device and the terminal device.

The unicast transmission path may be at least one of the following: a transmission path corresponding to a unicast session or a transmission path corresponding to a unicast bearer.

Optionally, that the AS sends the service data packet of the first service to the terminal device in the unicast transmission mode in step S303 includes: The AS sends the service data packet of the first service to the terminal device through a unicast transmission path of the first mobile communication system. Correspondingly, the terminal device receives, through the unicast transmission path of the first mobile communication system, the service data packet of the first service from the AS. In addition/Alternatively, the AS sends the service data packet of the first service to the terminal device through a unicast transmission path of the second mobile communication system. Correspondingly, the terminal device may receive, through the unicast transmission path of the second mobile communication system, the service data packet of the first service from the AS.

The following describes "the AS sends the service data packet of the first service to the terminal device through a unicast transmission path of the first mobile communication system".

The unicast transmission path of the first mobile communication system may include: a unicast transmission path between the unicast UPF of the first mobile communication system and the AN device of the first mobile communication system accessed by the terminal device, and a unicast transmission path between the terminal device and the AN device of the first mobile communication system accessed by the terminal device. The unicast transmission path of the first mobile communication system is exclusively used by the terminal device. In this case, the AS may send the service data packet of the first service to the unicast UPF through a transmission path between the AS and the unicast UPF. The unicast UPF may send the service data packet of the first service to the terminal device through the unicast transmission path of the first mobile communication system.

For example, when the first mobile communication system is a 5G mobile communication system, the unicast transmission path of the first mobile communication system is a transmission path corresponding to a 5G unicast session. The 5G unicast session may be a unicast session among the unicast user plane network element (for example, the unicast UPF) of the first mobile communication system, the AN device of the first mobile communication system accessed by the terminal device, and the terminal device. The transmission path between the unicast user plane network element and the AN device corresponding to the unicast session and the transmission path that is on the air interface side and that is between the AN device and the terminal device corresponding to the unicast session may be exclusively used by the terminal device. The unicast transmission path of the first mobile communication system may include the transmission path between the unicast user plane network element and the AN device corresponding to the unicast session and the transmission path that is on the air interface side and that is between the AN device and the terminal device corresponding to the unicast session. In this case, the AS may send the service data packet of the first service to the unicast UPF through the transmission path between the AS and the unicast UPF. The unicast UPF may send the service data packet of the first service to the terminal device through the unicast transmission path of the first mobile communication system.

The following describes "the AS sends the service data packet of the first service to the terminal device through a unicast transmission path of the second mobile communication system".

The unicast transmission path of the second mobile communication system may include: a unicast transmission path between the S-GW of the second mobile communication system and the AN device of the second mobile communication system accessed by the terminal device, and a unicast transmission path between the terminal device and the AN device of the second mobile communication system accessed by the terminal device. The unicast transmission path of the second mobile communication system is exclusively used by the terminal device. In this case, the AS may send the service data packet of the first service to the S-GW through a transmission path between the AS and the S-GW. The S-GW may send the service data packet of the first service to the terminal device through the unicast transmission path of the second mobile communication system.

For example, when the second mobile communication system is a 4G mobile communication system, the unicast transmission path of the second mobile communication system is a transmission path corresponding to a 4G unicast bearer. The unicast bearer is a unicast bearer among the S-GW of the second mobile communication system, the AN device of the second mobile communication system accessed by the terminal device, and the terminal device. The transmission path between the S-GW and the AN device corresponding to the unicast bearer and the transmission path that is on the air interface side and that is between the AN device and the terminal device corresponding to the unicast bearer may be exclusively used by the terminal device. The unicast transmission path of the second mobile communication system may include the transmission path between the S-GW and the AN device corresponding to the unicast bearer and the transmission path that is on the air interface side and that is between the AN device and the terminal device corresponding to the unicast bearer. In this case, the AS may send the service data packet of the first service to the S-GW through the transmission path between the AS and the S-GW. The S-GW may send the service data packet of the first service to the terminal device through the unicast transmission path of the second mobile communication system.

An embodiment of this application further provides a communication method. The method may be applied to the communication system shown in FIG. 1 or FIG. 2. In this method, before a terminal device performs inter-communication system switching (namely, a switching preparation phase), the terminal device may send first information to an AS. After receiving the first information, the AS may send a service data packet to the terminal device in a unicast transmission mode. Refer to a flowchart shown in FIG. 4. This embodiment of this application is described below by using an example in which the inter-communication system switching is switching from a 5G mobile communication system to a 4G mobile communication system. For ease of description, an example in which the terminal device is the UE is used below for description.

S401: The AS sends a service data packet of a first service to the UE over a 5G multicast session. Correspondingly, the UE receives the service data packet of the first service from the AS over the 5G multicast session.

For specific content of S401, refer to S301. Details are not described herein again.

FIG. 4 shows an implementation of S401: The AS sends the service data packet of the first service to the MB-UPF. The MB-UPF sends the service data packet of the first service to the UE through a transmission path between the AN device accessed by the UE and the MB-UPF that are corresponding to the 5G multicast session and a transmission path that is on an air interface side and that is between the AN device and the UE corresponding to the 5G multicast session.

S402: The UE generates the first information when a switching condition for the UE to switch from the 5G mobile communication system to the 4G mobile communication system is met.

For specific content of the switching condition and the first information, refer to S302. For a process in which the UE determines whether the switching condition is met, refer to S302. Details are not described herein again.

Optionally, the first information is generated by a client (client) that is in the UE and that implements the first service.

Specifically, step S402 is implemented in the following manners:
Implementation 1: The UE generates the first information when the switching condition for the UE to switch from the 5G mobile communication system to the 4G mobile communication system is met.
Implementation 2: When the switching condition for the UE to switch from the 5G mobile communication system to the 4G mobile communication system is met, the UE generates the first information only if the UE receives configuration information from the AS. For specific content of the configuration information, refer to the method shown in FIG. 3. Details are not described herein again.

S403: The UE sends the first information to the AS. Correspondingly, the AS receives the first information from the UE.

Specifically, S403 may be performed in the following manners:
Manner a: After generating the first information, the UE sends the first information to the AS.
Manner b: When the UE receives the configuration information from the AS, the UE may send the first information to the AS after generating the first information. For specific content of the configuration information, refer to the method shown in FIG. 3. Details are not described herein again.

It should be noted that an execution sequence of receiving the configuration information of the AS and generating the first information is not limited in this application. For example, the terminal device may first receive the configuration information of the AS, and generate the first information. Alternatively, the terminal device may first generate the first information, and receive the configuration information of the AS.

S404: The AS determines, based on the first information, whether to send the service data packet of the first service to the UE in the unicast transmission mode.

In some possible implementations, after receiving the first information, the AS may determine that the service data packet of the first service needs to be sent to the UE in the unicast transmission mode.

In some other possible implementations, when a preset condition is met, after receiving the first information, the AS may determine to send the service data packet of the first service to the UE in the unicast transmission mode. When the preset condition is not met, after receiving the first information, the AS may determine not to send the service data packet of the first service to the UE in the unicast transmission mode. For specific content of the preset condition, refer to the third preset condition in S303. Details are not described herein again.

S405: The AS sends the service data packet of the first service to the UE in the unicast transmission mode. Correspondingly, the UE receives the service data packet of the first service from the AS in the unicast transmission mode.

The unicast transmission mode may be represented by transmission of the service data through a unicast transmission path. Specifically, when the unicast transmission mode is used, the AS may send the service data packet of the first service to the UE through the unicast transmission path. Optionally, the unicast transmission path includes at least one of the following: a transmission path corresponding to a 5G unicast session and a transmission path corresponding to a 4G unicast bearer.

In some possible implementations, the AS may send the service data packet of the first service to the UE through the transmission path corresponding to the 5G unicast session.

FIG. 4 shows the implementation. Specifically, the AS may send the service data packet of the first service to the unicast UPF through a transmission path between the AS and the unicast UPF. The unicast UPF may send the service data packet of the first service to the UE through a transmission path between the unicast UPF and the AN device corresponding to the 5G unicast session and a transmission path between the AN device and the UE corresponding to the 5Gunicast session. For specific content of the implementation, refer to S303. Details are not described herein again.

In this implementation, before the UE is disconnected from the 5G mobile communication system, the AS may switch a transmission mode of the service data packet of the first service of the UE to the unicast transmission mode. In this way, when the UE switches from the 5G mobile communication system to the 4G mobile communication system, a conventional method for switching from the 5G mobile communication system to the 4G mobile communication system may be used. Transmission of the first service of the UE is not affected in an inter-communication system switching procedure of the UE. To be specific, when the UE meets a condition for the inter-communication system switching, the AS switches the transmission mode of the first service corresponding to the UE from a shared transmission mode or an individual transmission mode to the unicast transmission mode, to prevent service transmission from being interrupted due to a limitation such as a multicast support capability of a target communication system. In this way, continuity of service transmission can be maintained, to ensure continuity of an application layer service.

In some other possible implementations, the AS may send the service data packet of the first service to the UE through the transmission path corresponding to the 4G unicast bearer. For specific content, refer to S303. Details are not described herein again.

This embodiment of this application provides the communication method. Based on the method, the AS sends the service data packet of the first service to the UE over the 5G multicast session. When the switching condition for the UE to switch from the 5G mobile communication system to the 4G mobile communication system is met, the UE may send the first information to trigger the AS to send the service data packet of the first service to the UE in the unicast transmission mode. In this way, transmission of the first service of the UE is not affected in the inter-communication system switching procedure of the UE. To be specific, when the UE meets the condition for inter-communication system switching, the AS switches the transmission mode of the first service corresponding to the UE from a shared transmission mode or an individual transmission mode to the unicast transmission mode. This prevents service transmission from being interrupted due to a limitation such as the multicast support capability of the target communication system, to ensure continuity of service transmission.

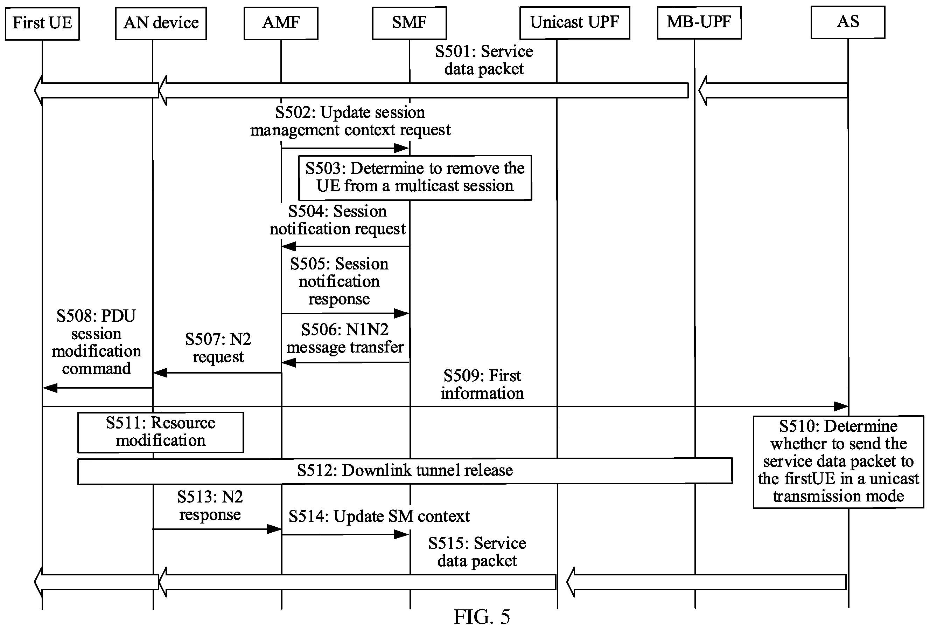

An embodiment of this application further provides a communication method. The method may be applied to the communication system shown in FIG. 1 or FIG. 2. In this method, when a terminal device performs inter-communication system switching, the terminal device may send first information to an AS based on an indication from a session management network element (for example, the SMF). After receiving the first information, the AS may send service data packet to the terminal device in a unicast transmission mode. Refer to a flowchart shown in FIG. 5. This embodiment of this application is described below by using an example in which the inter-communication system switching is switching from a 5G mobile communication system to a 4G mobile communication system. For ease of description, an example in which the terminal device is the UE is used below for description.

S501: A first UE receives a service data packet of a first service from the AS over a 5G multicast session. Correspondingly, the AS sends the service data packet of the first service to the first UE over the 5G multicast session.

For specific content of S501, refer to S401. Details are not described herein again.

S502: The AMF sends a PDU session update session management context request (Nsmf_PDUsession_updateSMcontext request) to the SMF when the first UE switches from the 5G mobile communication system to the 4G mobile communication system. Correspondingly, the SMF receives the PDU session update session management context request from the AMF.

The PDU session update session management context request may include a second indication. The second indication may indicate that the multicast session is rejected by the 4G mobile communication system (where for example, the multicast session is rejected by an AN device of the 4G mobile communication system) when the first UE switches from the 5G mobile communication system to the 4G mobile communication system. For specific content of the second indication, refer to S302. Details are not described herein again.

Optionally, before the AMF sends the PDU session context update request to the SMF, the AMF determines, based on a first message from an MME, that the multicast session is rejected by the 4G mobile communication system.

For example, when the first message includes indication information of a session rejected by the 4G mobile communication system, and the session rejected by the 4G mobile communication system includes a multicast session of the first UE, the AMF may determine that the multicast session of the first UE is rejected by the 4G mobile communication system.

For another example, when the first message includes indication information of a session accepted by the 4G mobile communication system, and the session accepted by the 4G mobile communication system does not include the multicast session, the AMF may determine that the multicast session is rejected by the 4G mobile communication system.

For still another example, when the first message includes indication information of a QoS flow of the session rejected by the 4G mobile communication system, and the QoS flow of the session rejected by the 4G mobile communication system includes a QoS flow of the multicast session of the first UE, the AMF may determine that the multicast session of the first UE is rejected by the 4G mobile communication system.

For still another example, when the first message includes indication information of a QoS flow of the session accepted by the 4G mobile communication system, and the QoS flow of the session accepted by the 4G mobile communication system does not include the QoS flow of the multicast session, the AMF may determine that the multicast session is rejected by the 4G mobile communication system.

Optionally, the PDU session update session management context request further includes at least one of the following: N2 SM information (N2 SM information) from the AN device of the 4G mobile communication system, and N2 SM information from an AN device of the 5G mobile communication system.

S503: The SMF determines, based on the second indication, to remove the first UE from the multicast session.

When the SMF determines, based on the second indication, that the multicast session is rejected by the 4G mobile communication system, the SMF determines that the first UE needs to be removed from the multicast session. For a manner in which the SMF determines that the multicast session is rejected by the 4G mobile communication system, refer to S302. Details are not described herein again.

After the SMF determines that the first UE needs to be removed from the multicast session, the first UE may be removed from the multicast session by performing S504 to S508 and S511 to S514.

S504: The SMF sends an MBS session notification request (MBS_session_notificationrRequest) to the AMF. Correspondingly, the AMF receives the MBS session notification request from the SMF.

The MBS session notification request may include at least one of the following: indication information of the first UE (for example, an identifier of the first UE) and identification information (for example, a TMGI) of the multicast session.

S505: The AMF sends an MBS session notification response (MBS_session_notification response) to the SMF. Correspondingly, the SMF receives the MBS session notification response from the AMF.

S506: The SMF sends an N1N2 message transfer (Namf_Communicate_N1N2MessageTransfer) message to the AMF. Correspondingly, the AMF receives the N1N2 message transfer message from the SMF.

The N1N2 message transfer message may be invoked by the SMF for the first UE.

Optionally, the N1N2 message transfer message includes at least one of the following: an N1 SM container (N1 SM container) and N2 SM information (N2 SM information). The N1 SM container may indicate to release the multicast session (for example, release the MBS session, MBS session release). The N2 SM information may indicate the AN device (namely, a source AN device of the first UE) of the 5G mobile communication system to remove the first UE from the multicast session.

S507: The AMF sends an N2 request (N2 Request) to the AN device. Correspondingly, the AN device receives the N2 request from the AMF.

Optionally, the N2 request includes the N2 SM information. The AN device may remove the first UE from the multicast session based on the N2 SM information. In other words, after receiving the N2 SM information, the AN device removes the first UE from the multicast session.

Optionally, the N2 request may further include the N1 SM container.

S508: The AN device sends a PDU session modification command (PDU session modification command) to the first UE. Correspondingly, the first UE receives the PDU session modification command from the AN device.

The PDU session modification command may include the N1 SM container.

S509: The first UE sends the first indication information to the AS.

The first UE may send the first information to the AS after determining, based on the N1 SM container, that the multicast session is released. Specifically, after receiving the N1 SM container, the first UE may determine that the multicast session is released. Then, the first UE may send the first information to the AS.

The first UE may send the first information to the AS via a client on the first UE.

Optionally, for specific content of the first information, refer to S302. For a manner in which the first UE sends the first information to the AS, refer to S302. Details are not described herein again.

In addition, the first information may further include but is not limited to at least one of the following: indication information of the first UE (for example, an identifier of the first UE) and identification information (for example, a TMGI) of the multicast session.

S510: The AS determines, based on the first information, whether to send the service data packet of the first service to the first UE in the unicast transmission mode.

For specific content of S510, refer to S404. Details are not described herein again.

S511: The AN device performs a resource modification procedure.

When the AN device determines that no UE (joined UE) that joins the multicast session exists in UEs accessing the AN device, the AN device may release a resource of the multicast session. Specifically, the AN device may release a radio resource corresponding to the 5G multicast session between the AN device and the UE.

S512: The AN device initiates a downlink tunnel release procedure (DL tunnel release).

When determining that no UE that joins the multicast session exists in the UEs accessing the AN device, the AN device may initiate a downlink tunnel release procedure for the multicast session.

For example, when the AN device exclusively uses a transmission path (or referred to as a transmission tunnel) between the AN device and the MB-UPF, the AN device may initiate a downlink tunnel release procedure from the AN device to the MB-UPF, to release the transmission path between the AN device and the MB-UPF for the multicast session.

For another example, when the AN device shares a transmission path (or referred to as a transmission tunnel) between the AN device and the MB-UPF with another AN device in a multicast tree manner, the AN device may initiate a downlink tunnel release procedure from the AN device to the MB-UPF, to leave a multicast tree corresponding to the multicast session.

S513: The AN device sends an N2 response (N2 Response) to the AMF. Correspondingly, the AMF receives the N2 response from the AN device.

Optionally, when no UE that joins the multicast session exists in UEs managed by the AMF, the AMF deletes a context of the multicast session after receiving the N2 response.

S514: The AMF sends a PDU session update SM context (Nsmf_PDU session_updateSM context) message to the SMF. Correspondingly, the SMF receives the PDU session update SM context message from the AMF.

The PDU session update SM context message may include the N2 response.

Optionally, after receiving the PDU session update SM context message, the SMF removes the first UE from the multicast session.

Optionally, when no UE that joins the multicast session exists in UEs managed by the SMF, the SMF deletes the context of the multicast session after receiving the PDU session update SM context message.

S515: The AS sends the service data packet to the first UE in the unicast transmission mode. Correspondingly, the first UE receives the service data packet of the first service from the AS in the unicast transmission mode.

For specific content of S515, refer to S405. Details are not described herein again. The following describes only a difference between S515 and S405.

When the AS sends the service data packet of the first service to the first UE over a 5G unicast session, the UE may perform switching based on a conventional procedure of switching from the 5G mobile communication system to the 4G mobile communication system. For example, an AN device accessed by the first UE may initiate, for the 5G unicast session, a switching procedure of the UE from the 5G mobile communication system to the 4G mobile communication system.

This embodiment of this application provides the communication method. Based on the method, the AS sends the service data packet of the first service to the first UE over the 5G multicast session. When the first UE receives an indication for releasing the multicast session, the first UE may send the first information to trigger the AS to send the service data packet of the first service to the first UE in the unicast transmission mode. In this way, transmission of the first service of the first UE is not affected in an inter-communication system switching procedure of the first UE. To be specific, when the first UE performs the inter-communication system switching procedure, the AS switches a transmission mode of the first service corresponding to the first UE from a shared transmission mode or an individual transmission mode to the unicast transmission mode. This prevents service transmission from being interrupted due to a limitation such as the multicast support capability of the target communication system, to ensure continuity of service transmission.

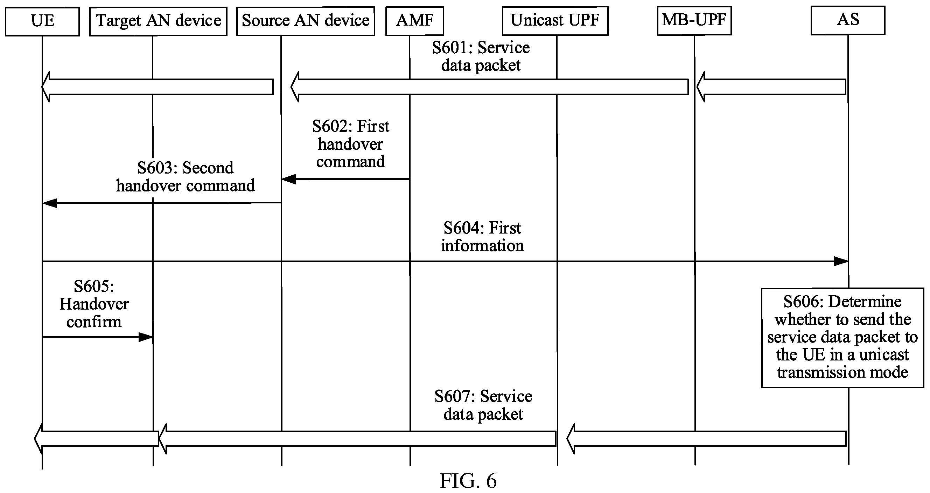

An embodiment of this application provides a communication method. The method may be applied to the communication system shown in FIG. 1 or FIG. 2. In this method, when a terminal device performs inter-communication system switching, the terminal device may send first information to an AS based on a handover command. After receiving the first information, the AS may send a service data packet to the terminal device in a unicast transmission mode. Refer to a flowchart shown in FIG. 6. This embodiment of this application is described below by using an example in which the inter-communication system switching is switching from a 5G mobile communication system to a 4G mobile communication system. For ease of description, an example in which the terminal device is the UE is used below for description.

S601: The UE receives a service data packet of a first service from the AS over a 5G multicast session. Correspondingly, the AS sends the service data packet of the first service to the UE over the 5G multicast session.

For specific content of S601, refer to S401. Details are not described herein again.

S602: An AN device (namely, a source AN device) accessed by the UE receives a first handover command (handover command) from the AMF. Correspondingly, the AMF sends the first handover command to the source AN device.

The AMF may send the first handover command to the source AN device when the UE switches from the 5G mobile communication system to the 4G mobile communication system. The source AN device may be an AN device in the 5G mobile communication system.

Optionally, the first handover command includes at least one of the following: a transparent transmission container, data forwarding tunnel information, information about a QoS flow that needs to be forwarded, and bearer information of the 4G mobile communication system.

Content of parameters included in the first handover command is described below by using examples.

For example, the transparent transmission container may include access information of the 4G mobile communication system. The access information of the 4G mobile communication system may include an identifier of a target AN device in the 4G mobile communication system.

For another example, the data forwarding tunnel information may include an identifier of a tunnel for forwarding a service data packet of the UE between the source AN device and the target AN device. The source AN device may forward the service data packet of the UE to the target AN device based on the data forwarding tunnel information. Specifically, the source AN device sends the service data packet of the UE to the target AN device through the tunnel corresponding to the tunnel identifier.

For still another example, the information about the QoS flow that needs to be forwarded may be an identifier of the QoS flow that needs to be forwarded. When the QoS flow that needs to be forwarded does not include a QoS flow of the multicast session, the multicast session is rejected by the 4G mobile communication system.

For still another example, the bearer information of the 4G mobile communication system may be an EPS bearer identifier (EPS bearer ID). When a bearer indicated by the bearer information of the 4G mobile communication system does not include a bearer corresponding to the multicast session, the multicast session is rejected by the 4G mobile communication system.

S603: The source AN device sends a second handover command to the UE. Correspondingly, the UE receives the second handover command from the source AN device.

Content of the first handover command and content of the second handover command may be the same or may be different.

Optionally, the second handover command may include at least one of the following: the access information of the 4G mobile communication system, the information about the QoS flow that needs to be forwarded, and the bearer information of the 4G mobile communication system.

S604: After the UE determines, based on the second handover command, that the multicast session is rejected by the 4G mobile communication system, the UE sends the first information to the AS.

Optionally, the UE determines, based on the information about the QoS flow that needs to be forwarded or the bearer information of the 4G mobile communication system in the second handover command, that the multicast session is rejected by the 4G mobile communication system. For a determining manner, refer to S302. Details are not described herein again.

Optionally, the UE sends the first information to the AS when the UE switches from the 5G mobile communication system to the 4G mobile communication system. Alternatively, the UE sends the first information to the AS after the UE switches from the 5G mobile communication system to the 4G mobile communication system.

For specific content of S604, refer to S302. Details are not described herein again.

S605: The UE sends a handover confirm (handover confirm) to the target AN device in the 4G mobile communication system.

Optionally, the UE sends the handover confirm to a target device based on the access information of the 4G mobile communication system in the second handover command, to access the target AN device.

For example, when the access information of the 4G mobile communication system includes information (for example, an identifier of the target AN device) indicating the target AN device, the UE determines the target AN device based on the information indicating the target AN device, and sends the handover confirm to the target AN device.

For another example, when the access information of the 4G mobile communication system includes information indicating a resource for accessing the target AN device, the UE sends a handover request to the target AN device on the resource.

S606: The AS determines, based on the first information, whether to send the service data packet of the first service to the UE in the unicast transmission mode.

For specific content of S606, refer to S404. Details are not described herein again.

S607: The AS sends the service data packet of the first service to the UE in the unicast transmission mode. Correspondingly, the UE receives the service data packet of the first service from the AS in the unicast transmission mode.

For specific content of S607, refer to S405. Details are not described herein again.

It should be noted that imposes an execution sequence of S605 and any step in S604, S606, and S607 is not limited in this application. For example, S604 may be performed before S605. For another example, S605 may be performed before S604. For still another example, S605 may be performed before S606. For still another example, S606 may be performed before S605. For still another example, S605 may be performed before S607. For still another example, S607 may be performed before S605.

This embodiment of this application provides the communication method. Based on the method, the AS sends the service data packet of the first service to the UE over the 5G multicast session. When the UE receives the second handover command, the UE may send the first information based on the second handover command, to trigger the AS to send the service data packet of the first service to the UE in the unicast transmission mode. In this way, transmission of the first service of the UE is not affected in an inter-communication system switching procedure of the UE. To be specific, when the terminal device performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

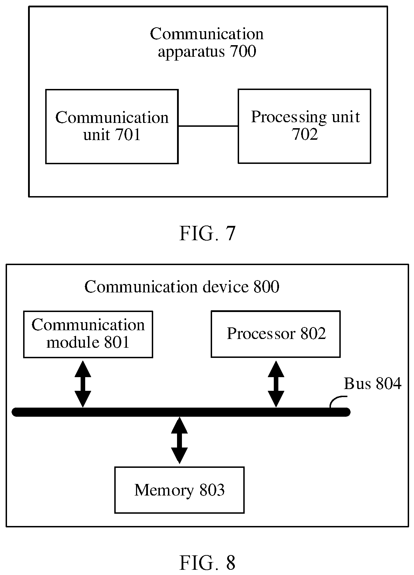

Based on a same technical concept, this application further provides a communication apparatus. A structure of the apparatus is shown in FIG. 7, and includes a communication unit 701 and a processing unit 702. The communication apparatus 700 may be applied to the terminal device or the SMF in the communication system shown in FIG. 1, or applied to the terminal device, the AS, or the SMF in the communication system shown in FIG. 2, and may implement the communication method provided in the foregoing embodiments and examples of this application. Functions of the units in the apparatus 700 are described below.

The communication unit 701 is configured to receive and send data.

When the communication apparatus 700 is applied to the terminal device (in a scenario in which the AS interacts with the terminal device), the AS, or the SMF, the communication unit 701 may be implemented by using a physical interface, a communication module, a communication interface, or an input/output interface. The communication apparatus 700 may be connected to a network cable or a cable by using the communication unit, to establish a physical connection to another device.

When the communication apparatus 700 is applied to the terminal device (in a scenario in which the AN device interacts with the terminal device), the communication unit 701 may be implemented by using a transceiver, for example, a mobile communication module.

The mobile communication module may provide a solution that is applied to the terminal device and that includes wireless communication such as 2G, 3G, 4G, and 5G. The mobile communication module may include at least one antenna, at least one filter, a switch, a power amplifier, a low noise amplifier (low noise amplifier, LNA), and the like. The terminal device may access an AN device in an AN via the mobile communication module, and interact with the AN device. Alternatively, the AN device may communicate with an accessed terminal device via the mobile communication module.

In an implementation, the communication apparatus 700 is applied to the terminal device (for example, the terminal device in FIG. 3, the UEs in FIG. 4 and FIG. 6, or the first UE in FIG. 5) in the embodiment shown in FIG. 3, FIG. 4, FIG. 5, or FIG. 6 in this application. Specific functions of the processing unit 702 in this implementation are described below.

The processing unit 702 is configured to: receive a service data packet of a first service from an application server AS over a multicast session of a first mobile communication system via the communication unit 701; and send first information to the AS via the communication unit 701 when a switching condition for the terminal device to switch from the first mobile communication system to a second mobile communication system is met or when the terminal device switches from the first mobile communication system to the second mobile communication system. The first information is used to trigger the AS to send the service data packet of the first service to the terminal device in a unicast transmission mode.

Optionally, the processing unit 702 is specifically configured to: after sending the first information to the AS, receive the service data packet of the first service from the AS in the unicast transmission mode via the communication unit 701.

Optionally, the processing unit 702 is specifically configured to: receive the service data packet of the first service from the AS through a unicast transmission path of the first mobile communication system via the communication unit 701; and/or receive the service data packet of the first service from the AS through a unicast transmission path of the second mobile communication system via the communication unit 701.

Optionally, the switching condition includes at least one or a combination of the following:
signal quality of the first mobile communication system is less than a first threshold;
signal quality of the second mobile communication system is greater than a second threshold;
signal quality of the second mobile communication system is greater than signal quality of the first mobile communication system;
the terminal device is located within a coverage area of the second mobile communication system; or
the terminal device moves from a coverage area of the first mobile communication system to a coverage area of the second mobile communication system.

Optionally, the first information includes at least one of the following:
information indicating that the terminal device prepares to switch from the first mobile communication system to the second mobile communication system;
information indicating that the terminal device prepares to switch to the second mobile communication system;
information indicating that the terminal device is about to switch from the first mobile communication system to the second mobile communication system;
information indicating that the terminal device is about to switch to the second mobile communication system;
information indicating that the terminal device is located within a coverage area of the second mobile communication system;
information indicating that the terminal device moves from a coverage area of the first mobile communication system to a coverage area of the second mobile communication system;
information indicating that signal quality of the first mobile communication system is less than a first threshold;
information indicating that signal quality of the second mobile communication system is greater than a second threshold;
information indicating that signal quality of the second mobile communication system is greater than signal quality of the first mobile communication system;
information indicating that the terminal device is about to leave the multicast session;
information indicating that the terminal device is about to be attached to or has been attached to the second mobile communication system; or
information used to request the AS to send the service data packet of the first service to the terminal device in the unicast transmission mode.

Optionally, the processing unit 702 is specifically configured to:
receive a first indication from a session management network element of the first mobile communication system via the communication unit 701, where the first indication indicates that the multicast session is released; and
send the first information to the AS based on the first indication via the communication unit 701, where the first information includes at least one of the following: information indicating that the terminal device has left the multicast session, information indicating that the terminal device is removed from the multicast session, information indicating that the multicast session is released, or information indicating that the terminal device cannot receive the service data packet of the first service over the multicast session.

Optionally, the processing unit 702 is specifically configured to: when at least one of the following conditions is met, send the first information to the AS based on the first indication via the communication unit 701:
the multicast session is not a local multicast session; or
the multicast session is a local multicast session, and the terminal device is located in a service area of the local multicast session.

Optionally, the processing unit 702 is specifically configured to:
receive a handover command from the first mobile communication system via the communication unit 701, where the handover command instructs the terminal device to switch to the second mobile communication system;
determining, based on the handover command, that the multicast session is rejected by the second mobile communication system; and
send the first information to the AS via the communication unit 701.

Optionally, the first information includes at least one of the following:
information indicating that the terminal device is about to switch from the first mobile communication system to the second mobile communication system;
information indicating that the terminal device is about to switch to the second mobile communication system;
information indicating that the terminal device has switched from the first mobile communication system to the second mobile communication system;
information indicating that the terminal device has switched to the second mobile communication system;
information indicating that the terminal device has been attached to the second mobile communication system;
information indicating that the terminal device is located within a coverage area of the second mobile communication system;
information indicating that the terminal device moves from a coverage area of the first mobile communication system to a coverage area of the second mobile communication system;
information indicating that the terminal device has left the multicast session;
information indicating that the terminal device is removed from the multicast session;
information indicating that the multicast session is released; or
information indicating that the terminal device cannot receive the service data packet of the first service over the multicast session.

Optionally, the first mobile communication system is a mobile communication system using a first RAT, and the second mobile communication system is a mobile communication system using a second RAT.

In an implementation, the communication apparatus 700 is applied to the AS in the embodiment shown in FIG. 3, FIG. 4, FIG. 5, or FIG. 6 in this application. Specific functions of the processing unit 702 in this implementation are described below.

The processing unit 702 is configured to: send a service data packet of a first service to a terminal device over a multicast session of a first mobile communication system via the communication unit 701; receive first information from the terminal device via the communication unit 701, where the first information is used to trigger the AS to send the service data packet of the first service to the terminal device in a unicast transmission mode; and send the service data packet of the first service to the terminal device in the unicast transmission mode based on the first information via the communication unit 701.

Optionally, the first information includes at least one of the following:
information indicating that the terminal device prepares to switch from the first mobile communication system to a second mobile communication system;
information indicating that the terminal device prepares to switch to a second mobile communication system;
information indicating that the terminal device is about to switch from the first mobile communication system to a second mobile communication system;
information indicating that the terminal device is about to switch to a second mobile communication system;
information indicating that the terminal device has switched from the first mobile communication system to a second mobile communication system;
information indicating that the terminal device has switched to a second mobile communication system;
information indicating that the terminal device is located within a coverage area of a second mobile communication system;
information indicating that the terminal device moves from a coverage area of the first mobile communication system to a coverage area of a second mobile communication system;
information indicating that signal quality of the first mobile communication system is less than a first threshold;
information indicating that signal quality of a second mobile communication system is greater than a second threshold;
information indicating that signal quality of a second mobile communication system is greater than signal quality of the first mobile communication system;
information indicating that the terminal device is about to leave the multicast session;
information indicating that the terminal device has left the multicast session;
information indicating that the terminal device is removed from the multicast session;
information indicating that the terminal device is about to be attached to or has been attached to a second mobile communication system;
information indicating that the terminal device cannot receive the service data packet of the first service over the multicast session; or
information used to request the AS to send the service data packet of the first service to the terminal device in the unicast transmission mode.

Optionally, the processing unit 702 is specifically configured to: send the service data packet of the first service to the terminal device through a unicast transmission path of the first mobile communication system via the communication unit 701; and/or send the service data packet of the first service to the terminal device through a unicast transmission path of the second mobile communication system via the communication unit 701.

Optionally, the first mobile communication system is a mobile communication system using a first RAT, and the second mobile communication system is a mobile communication system using a second RAT.

Optionally, the processing unit 702 is specifically configured to: after receiving the first information, send the service data packet of the first service to the terminal device in the unicast transmission mode via the communication unit 701 when at least one of the following conditions is met:
the mobile communication system using the second RAT does not support a broadcast transmission mode;
the terminal device is not in a broadcast area of the mobile communication system that corresponds to the first service and that uses the second RAT;
the terminal device does not support broadcast using the second RAT; or
the multicast session does not support switching from the mobile communication system using the first RAT to the mobile communication system using the second RAT.

In an implementation, the communication apparatus 700 is applied to the SMF in the embodiment shown in FIG. 5 in this application. Specific functions of the processing unit 702 in this implementation are described below.

The processing unit 702 is configured to: receive a second indication from a mobility management network element of the first mobile communication system via the communication unit 701, where the second indication indicates that a multicast session of a terminal device is rejected by a second mobile communication system when the terminal device switches from the first mobile communication system to the second mobile communication system; and remove the terminal device from the multicast session based on the second indication.

Optionally, the processing unit 702 is specifically configured to send a first indication to the terminal device via the communication unit 701, where the first indication indicates that the multicast session is released.

Optionally, the second indication includes: information indicating that the multicast session is rejected by the second mobile communication system, or information indicating that a quality of service QoS flow of the multicast session is rejected by the second mobile communication system.

Optionally, the first mobile communication system is a mobile communication system using a first RAT, and the second mobile communication system is a mobile communication system using a second RAT.

It should be noted that, in the foregoing embodiment of this application, division into the modules is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the existing technology, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, this application further provides a communication device. The communication device may be applied to the terminal device or the SMF in the communication system shown in FIG. 1, or applied to the terminal device, the AS, or the SMF in the communication system shown in FIG. 2. The communication method provided in the foregoing embodiments and examples of this application may be implemented. The communication device has the functions of the communication apparatus shown in FIG. 7. Refer to FIG. 8. The communication device 800 includes a communication module 801, a processor 802, and a memory 803. The communication module 801, the processor 802, and the memory 803 are connected to each other.

Optionally, the communication module 801, the processor 802, and the memory 803 are connected to each other through a bus 804. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus.

The communication module 801 is configured to receive and send data, to implement communication and interaction with another device. For example, when the communication device 800 is applied to the terminal device (in a scenario in which the AS interacts with the terminal device), the AS, or the SMF, the communication module 801 may be implemented by using a physical interface, a communication module, a communication interface, or an input/output interface. For another example, when the communication device 800 is applied to the terminal device (in a scenario in which the AN device interacts with the terminal device), the communication module 801 may also be implemented by using a transceiver.

In an implementation, the communication device 800 is applied to the terminal device (for example, the terminal device in FIG. 3, the UEs in FIG. 4 and FIG. 6, or the first UE in FIG. 5) in the embodiment shown in FIG. 3, FIG. 4, FIG. 5, or FIG. 6 in this application. The processor 802 is specifically configured to:
receive a service data packet of a first service from an application server AS over a multicast session of a first mobile communication system via the communication module 801; and send first information to the AS via the communication module 801 when a switching condition for the terminal device to switch from the first mobile communication system to a second mobile communication system is met or when the terminal device switches from the first mobile communication system to the second mobile communication system, where the first information is used to trigger the AS to send the service data packet of the first service to the terminal device in a unicast transmission mode.

In an implementation, the communication device 800 is applied to the AS in the embodiment shown in FIG. 3, FIG. 4, FIG. 5, or FIG. 6 in this application. The processor 802 is specifically configured to:
send a service data packet of a first service to the terminal device over a multicast session of a first mobile communication system via the communication module 801; receive first information from the terminal device via the communication module 801, where the first information is used to trigger the AS to send the service data packet of the first service to the terminal device in a unicast transmission mode; and send the service data packet of the first service to the terminal device in the unicast transmission mode based on the first information via the communication module 801.

In an implementation, the communication device 800 is applied to the SMF in the embodiment shown in FIG. 5 in this application. The processor 802 is specifically configured to:
receive a second indication from a mobility management network element of the first mobile communication system via the communication module 801, where the second indication indicates that a multicast session of the terminal device is rejected by a second mobile communication system when the terminal device switches from the first mobile communication system to the second mobile communication system; and remove the terminal device from the multicast session based on the second indication.

For specific functions of the processor 802, refer to the descriptions in the communication method provided in the foregoing embodiments and examples of this application and the descriptions of the specific functions of the communication apparatus 700 in the embodiment shown in FIG. 7 of this application. Details are not described herein again.

The memory 803 is configured to store program instructions, data, and the like. Specifically, the program instructions may include program code, and the program code includes computer operation instructions. The memory 803 may include a random access memory (random access memory, RAM), and may further include a non-volatile memory (non-volatile memory), for example, at least one magnetic disk memory. The processor 802 executes the program instructions stored in the memory 803, and implements the foregoing function by using the data stored in the memory 803, to implement the communication method provided in the foregoing embodiments of this application.

It may be understood that the memory 803 in FIG. 8 of this application may be a volatile memory or a non-volatile memory, or may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. Through examples rather than limitative descriptions, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memories in the system and method described in this specification are intended to include but not limited to these memories and any memory of another appropriate type.

Based on the foregoing embodiments, an embodiment of this application further provides a computer program. When the computer program is run on a computer, the computer is enabled to perform the communication method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the communication method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and that can be accessed by a computer.

Based on the foregoing embodiments, an embodiment of this application further provides a chip. The chip is configured to read a computer program stored in a memory, to implement the communication method provided in the foregoing embodiments.

Based on the foregoing embodiments, an embodiment of this application provides a chip system. The chip system includes a processor, configured to support a computer apparatus in implementing functions of a service device, a forwarding device, or a station device according to the foregoing embodiments. In a possible design, the chip system further includes a memory. The memory is configured to store a necessary program and necessary data of the computer apparatus. The chip system may include a chip, or may include the chip and another discrete component.

In conclusion, embodiments of this application provide a communication method, an apparatus, and a device. In this method, the AS sends the service data packet of the first service to the terminal device over the multicast session of the first mobile communication system. When the condition for the terminal device to perform inter-communication system switching is met or the terminal device performs the inter-communication system switching, the terminal device may send the first information to trigger the AS to send the service data packet of the first service to the terminal device in the unicast transmission mode. In this way, transmission of the first service of the terminal device is not affected in an inter-communication system switching procedure of the terminal device. To be specific, when the terminal device meets the condition for inter-communication system switching or performs the inter-communication system switching procedure, the AS switches a transmission mode of the first service corresponding to the terminal device from a shared transmission mode or an individual transmission mode to the unicast transmission mode. This prevents service transmission from being interrupted due to a limitation such as a multicast support capability of a target communication system, to ensure continuity of service transmission.

In embodiments of this application, unless otherwise stated or there is a logic conflict, terms and/or descriptions in different embodiments are consistent and may be mutually referenced, and technical features in the different embodiments may be combined based on an internal logical relationship thereof, to form a new embodiment.

A person skilled in the art should understand that embodiments of this application may be provided as a method, a system, or a computer program product. Therefore, this application may use a form of hardware-only embodiments, software-only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

These computer program instructions may alternatively be stored in a computer-readable memory that can instruct the computer or another programmable data processing device to work in a specific manner, so that the instructions stored in the computer readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operation steps are performed on the computer or another programmable device, to generate computer-implemented processing. Therefore, the instructions executed on the computer or another programmable device provide steps for implementing a specific function in one or more procedures in the flowcharts and/or in one or more blocks in the block diagrams.

It is clear that, a person skilled in the art can make various modifications and variations to this application without departing from the scope of this application. This application is intended to cover these modifications and variations of this application provided that they fall within the scope of protection defined by the claims and their equivalent technologies.

## Claims

1. A communication method, applied to a terminal device, wherein the method comprises:
receiving a service data packet of a first service from an application server AS over a multicast session of a first mobile communication system; and
sending first information to the AS when a switching condition for the terminal device to switch from the first mobile communication system to a second mobile communication system is met or when the terminal device switches from the first mobile communication system to the second mobile communication system, wherein the first information is used to trigger the AS to send the service data packet of the first service to the terminal device in a unicast transmission mode.

2. The method according to claim 1, wherein after the sending first information to the AS, the method further comprises:
receiving the service data packet of the first service from the AS in the unicast transmission mode.

3. The method according to claim 2, wherein the receiving the service data packet of the first service from the AS in the unicast transmission mode comprises:
receiving the service data packet of the first service from the AS through a unicast transmission path of the first mobile communication system; and/or
receiving the service data packet of the first service from the AS through a unicast transmission path of the second mobile communication system.

4. The method according to any one of claims 1 to 3, wherein the switching condition comprises at least one or a combination of the following:
signal quality of the first mobile communication system is less than a first threshold;
signal quality of the second mobile communication system is greater than a second threshold;
signal quality of the second mobile communication system is greater than signal quality of the first mobile communication system;
the terminal device is located within a coverage area of the second mobile communication system; or
the terminal device moves from a coverage area of the first mobile communication system to a coverage area of the second mobile communication system.

5. The method according to any one of claims 1 to 3, wherein the first information comprises at least one of the following:
information indicating that the terminal device prepares to switch from the first mobile communication system to the second mobile communication system;
information indicating that the terminal device prepares to switch to the second mobile communication system;
information indicating that the terminal device is about to switch from the first mobile communication system to the second mobile communication system;
information indicating that the terminal device is about to switch to the second mobile communication system;
information indicating that the terminal device has switched from the first mobile communication system to the second mobile communication system;
information indicating that the terminal device has switched to the second mobile communication system;
information indicating that the terminal device is located within a coverage area of the second mobile communication system;
information indicating that the terminal device moves from a coverage area of the first mobile communication system to a coverage area of the second mobile communication system;
information indicating that signal quality of the first mobile communication system is less than a first threshold;
information indicating that signal quality of the second mobile communication system is greater than a second threshold;
information indicating that signal quality of the second mobile communication system is greater than signal quality of the first mobile communication system;
information indicating that the terminal device is about to leave the multicast session;
information indicating that the terminal device has left the multicast session;
information indicating that the terminal device is removed from the multicast session;
information indicating that the multicast session is released;
information indicating that the terminal device cannot receive the service data packet of the first service over the multicast session;
information indicating that the terminal device is about to be attached to or has been attached to the second mobile communication system; or
information used to request the AS to send the service data packet of the first service to the terminal device in the unicast transmission mode.

6. The method according to any one of claims 1 to 5, wherein the method further comprises:
receiving a first indication from a session management network element of the first mobile communication system, wherein the first indication indicates that the multicast session is released; and
the sending first information to the AS comprises:
sending the first information to the AS based on the first indication, wherein the first information comprises at least one of the following: the information indicating that the terminal device has left the multicast session, the information indicating that the terminal device is removed from the multicast session, the information indicating that the multicast session is released, or the information indicating that the terminal device cannot receive the service data packet of the first service over the multicast session.

7. The method according to claim 6, wherein the sending the first information to the AS based on the first indication comprises:
sending the first information to the AS based on the first indication when at least one of the following conditions is met:
the multicast session is not a local multicast session; or
the multicast session is a local multicast session, and the terminal device is located in a service area of the local multicast session.

8. The method according to any one of claims 1 to 3, wherein the sending first information to the AS when the terminal device switches from the first mobile communication system to the second mobile communication system comprises:
receiving a handover command from the first mobile communication system, wherein the handover command instructs the terminal device to switch to the second mobile communication system;
determining, based on the handover command, that the multicast session is rejected by the second mobile communication system; and
sending the first information to the AS.

9. The method according to any one of claims 1 to 8, wherein the first mobile communication system is a mobile communication system using a first radio access technology RAT, and the second mobile communication system is a mobile communication system using a second RAT.

10. A communication method, applied to an application server AS, wherein the method comprises:
sending a service data packet of a first service to a terminal device over a multicast session of a first mobile communication system;
receiving first information from the terminal device, wherein the first information is used to trigger the AS to send the service data packet of the first service to the terminal device in a unicast transmission mode; and
sending the service data packet of the first service to the terminal device in the unicast transmission mode based on the first information.

11. The method according to claim 10, wherein the first information comprises at least one of the following:
information indicating that the terminal device prepares to switch from the first mobile communication system to a second mobile communication system;
information indicating that the terminal device prepares to switch to a second mobile communication system;
information indicating that the terminal device is about to switch from the first mobile communication system to a second mobile communication system;
information indicating that the terminal device is about to switch to a second mobile communication system;
information indicating that the terminal device has switched from the first mobile communication system to a second mobile communication system;
information indicating that the terminal device has switched to a second mobile communication system;
information indicating that the terminal device is located within a coverage area of a second mobile communication system;
information indicating that the terminal device moves from a coverage area of the first mobile communication system to a coverage area of a second mobile communication system;
information indicating that signal quality of the first mobile communication system is less than a first threshold;
information indicating that signal quality of a second mobile communication system is greater than a second threshold;
information indicating that signal quality of a second mobile communication system is greater than signal quality of the first mobile communication system;
information indicating that the terminal device is about to leave the multicast session;
information indicating that the terminal device has left the multicast session;
information indicating that the terminal device is removed from the multicast session;
information indicating that the multicast session is released;
information indicating that the terminal device is about to be attached to or has been attached to a second mobile communication system;
information indicating that the terminal device cannot receive the service data packet of the first service over the multicast session; or
information used to request the AS to send the service data packet of the first service to the terminal device in the unicast transmission mode.

12. The method according to claim 11, wherein the sending the service data packet of the first service to the terminal device in the unicast transmission mode comprises:
sending the service data packet of the first service to the terminal device through a unicast transmission path of the first mobile communication system; and/or
sending the service data packet of the first service to the terminal device through a unicast transmission path of the second mobile communication system.

13. The method according to claim 11 or 12, wherein the first mobile communication system is a mobile communication system using a first radio access technology RAT, and the second mobile communication system is a mobile communication system using a second RAT.

14. The method according to claim 13, wherein the sending the service data packet of the first service to the terminal device in the unicast transmission mode based on the first information comprises:
sending the service data packet of the first service to the terminal device in the unicast transmission mode after the first information is received and when at least one of the following conditions is met:
the mobile communication system using the second RAT does not support a broadcast transmission mode;
the terminal device is not in a broadcast area of the mobile communication system that corresponds to the first service and that uses the second RAT;
the terminal device does not support broadcast using the second RAT; or
the multicast session does not support switching from the mobile communication system using the first RAT to the mobile communication system using the second RAT.

15. A communication method, applied to a session management network element of a first mobile communication system, wherein the method comprises:
receiving a second indication from a mobility management network element of the first mobile communication system, wherein the second indication indicates that a multicast session of a terminal device is rejected by a second mobile communication system when the terminal device switches from the first mobile communication system to the second mobile communication system; and
removing the terminal device from the multicast session based on the second indication.

16. The method according to claim 15, wherein the method further comprises:
sending a first indication to the terminal device, wherein the first indication indicates that the multicast session is released.

17. The method according to claim 15 or 16, wherein the second indication comprises:
information indicating that the multicast session is rejected by the second mobile communication system, or information indicating that a quality of service QoS flow of the multicast session is rejected by the second mobile communication system.

18. The method according to any one of claims 15 to 17, wherein the first mobile communication system is a mobile communication system using a first radio access technology RAT, and the second mobile communication system is a mobile communication system using a second RAT.

19. A communication apparatus, applied to a terminal device and comprising:
a communication unit, configured to receive and send data; and
a processing unit, configured to perform the method according to any one of claims 1 to 9 by using the communication unit.

20. A communication apparatus, applied to an application server AS and comprising:
a communication unit, configured to receive and send data; and
a processing unit, configured to perform the method according to any one of claims 10 to 14 by using the communication unit.

21. A communication apparatus, applied to a session management network element and comprising:
a communication unit, configured to receive and send data; and
a processing unit, configured to perform the method according to any one of claims 15 to 18 by using the communication unit.

22. A communication system, comprising:
a terminal device, configured to implement the method according to any one of claims 1 to 9;
an application server AS, configured to implement the method according to any one of claims 10 to 14; and
a session management network element, configured to implement the method according to any one of claims 15 to 18.

23. A computer-readable storage medium, wherein the computer-readable storage medium stores a computer program, and when the computer program is run on a computer, the computer is enabled to perform the method according to any one of claims 1 to 18.

24. A chip, wherein the chip is coupled to a memory, and the chip reads a computer program stored in the memory, to perform the method according to any one of claims 1 to 18.
